(19) Europäisches Patentamt / European Patent Office / Office européen des brevets

(11) **EP 2 672 713 A1**

## (12) EUROPEAN PATENT APPLICATION
published in accordance with Art. 153(4) EPC

(43) Date of publication:
**11.12.2013 Bulletin 2013/50**

(21) Application number: **12865118.9**

(22) Date of filing: **17.12.2012**

(51) Int Cl.:
**H04N 13/00** (2006.01)　　　**H04N 7/26** (2006.01)

(86) International application number:
**PCT/JP2012/082710**

(87) International publication number:
**WO 2013/105401 (18.07.2013 Gazette 2013/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.01.2012 JP 2012005688**

(71) Applicant: **Sony Corporation
Tokyo 108-0075 (JP)**

(72) Inventor: **TSUKAGOSHI, Ikuo
Tokyo 108-0075 (JP)**

(74) Representative: **Ealey, Douglas Ralph
D Young & Co LLP
120 Holborn
London EC1N 2DY (GB)**

(54) **TRANSMISSION DEVICE, TRANSMISSION METHOD, RECEIVING DEVICE, AND RECEIVING METHOD**

(57)　　Depth control of graphics to be overlaid and displayed on a three-dimensional image in a receiving side can be sufficiently performed.

Disparity information obtained for each of pictures of image data is inserted into a video stream, and then, the video steam is transmitted. Depth control of graphics to be overlaid and displayed on a three-dimensional image in a receiving side can be sufficiently performed with the picture (frame) precision. Identification information for identifying whether or not there is an insertion of disparity information into a video stream is inserted into a layer of a container. Due to this identification information, a receiving side is able to easily identify whether or not there is an insertion of disparity information into a video stream and to appropriately perform depth control of graphics.

FIG. 9

## Description

Technical Field

The present technology relates to a transmitting apparatus, a transmitting method, a receiving apparatus, and a receiving method. More particularly, the technology relates to a transmitting apparatus, etc. for sufficiently performing overlay and display of graphics on a three-dimensional image.

Background Art

For example, in PTL 1, a transmission method for transmitting three-dimensional image data by using television broadcasting waves has been proposed. In this case, left-eye image data and right-eye image data forming a three-dimensional image are transmitted, and in a television receiver, three-dimensional image display utilizing binocular disparity is performed.

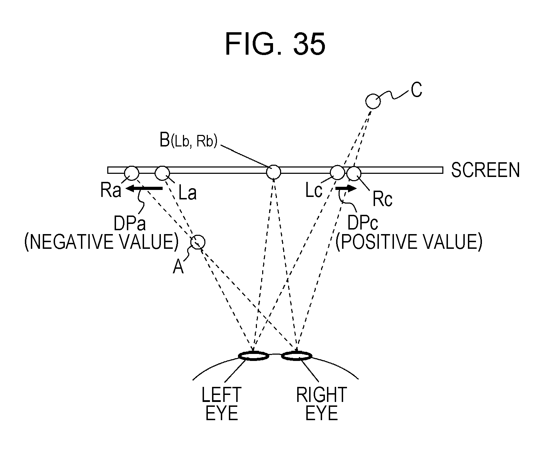

Fig. 35 illustrates, in three-dimensional image display utilizing binocular disparity, the relationship between display positions of a left image and a right image forming an object on a screen and a playback position of a three-dimensional image of the object A. For example, as shown in the drawing, concerning an object A for which a left image La thereof is displayed while being shifted toward the right side on the screen and for which a right image Ra thereof is displayed while being shifted toward the left side on the screen, the line of sight of the left eye and the line of sight of the right eye cross each other in front of the screen surface. Thus, the playback position of a three-dimensional image of the object A is in front of the screen surface.

Also, for example, as shown in the drawing, concerning an object B for which a left image Lb thereof and a right image Rb thereof are displayed at the same position on the screen, the line of sight of the left eye and the line of sight of the right eye cross each other on the screen surface. Thus, the playback position of a three-dimensional image of the object B is on the screen surface. Further, for example, as shown in the drawing, concerning an object C for which a left image Lc thereof is displayed while being shifted toward the left side and for which a right image Rc thereof is displayed while being shifted toward the right side, the line of sight of the left eye and the line of sight of the right eye cross each other behind the screen surface. Thus, the playback position of a three-dimensional image of the object C is behind the screen surface.

Citation List

Patent Literature

PTL 1: Japanese Unexamined Patent Application Publication No. 2005-6114

Summary of Invention

Technical Problem

As stated above, in displaying a three-dimensional image, a viewer perceives perspective of a three-dimensional image by utilizing binocular disparity. Concerning graphics overlaid and displayed on an image in a television receiver, too, it is expected that, not only in terms of a two-dimensional space, but also in terms of the three-dimensional depth, such graphics will be subjected to rendering together with display of a three-dimensional image. When overlaying and displaying graphics, such as OSD (On-Screen Display) graphics, application graphics, or the like, on an image, it is expected that perspective matching will be maintained by performing disparity adjustments in accordance with perspective of each object within the image.

It is an object of the present technology to sufficiently perform depth control of graphics to be overlaid and displayed on a three-dimensional image in a receiving side.

Solution to Problem

A concept of the present technology is a transmitting apparatus including:

an image data obtaining unit that obtains left-eye image data and right-eye image data which form a three-dimensional image;

a disparity information obtaining unit that obtains, for each of pictures of the obtained image data, disparity information concerning the left-eye image data with respect to the right-eye image data and concerning the right-eye image data with respect to the left-eye image data;

a disparity information inserting unit that inserts the obtained disparity information into a video stream which is obtained by encoding the obtained image data;

an image data transmitting unit that transmits a container of a predetermined format which contains the video stream into which the disparity information is inserted; and

an identification information inserting unit that inserts, into a layer of the container, identification information for identifying whether or not there is an insertion of the disparity information into the video stream.

In the present technology, left-eye image data and right-eye image data which form a three-dimensional image are obtained by the image data obtaining unit. In this case, the image data is, for example, data obtained by capturing an image with a camera or by reading an image from a storage medium.

For each of pictures of the obtained image data, disparity information concerning the left-eye image data with respect to the right-eye image data and concerning the right-eye image data with respect to the left-eye image data is obtained by the disparity information obtaining unit. In this case, the disparity information is, for example, information generated on the basis of left-eye image data and right-eye image data or information read from a storage medium.

The obtained disparity information is inserted, by the disparity information inserting unit, into a video stream which is obtained by encoding the obtained image data. For example, the disparity information may be inserted into the video stream in units of pictures or in units of GOPs (Groups of Pictures). Alternatively, the disparity information may be inserted by using another unit, for example, in units of scenes.

A container of a predetermined format which contains the video stream into which the disparity information is inserted is transmitted by the image data transmitting unit. For example, the container may be a transport stream (MPEG-2 TS) defined in the digital broadcasting standards. Alternatively, for example, the container may be MP4 used in the Internet distribution or another format of a container.

Identification information for identifying whether or not there is an insertion of the disparity information into the video stream is inserted into a layer of the container by the identification information inserting unit. For example, the container may be a transport stream, and the identification information inserting unit may insert the identification information under a program map table or an event information table. For example, the identification information inserting unit may describe the identification information in a descriptor inserted under the program map table or the event information table.

As described above, in the present technology, disparity information obtained for each picture of image data is inserted into a video stream, and then, the video stream is transmitted. Thus, depth control of graphics to be overlaid and displayed on a three-dimensional image in a receiving side can be sufficiently performed with the picture (frame) precision. Moreover, in the present technology, identification information indicating whether or not there is an insertion of disparity information into a video stream is inserted into a layer of a container. Due to this identification information, a receiving side is able to easily identify whether or not there is an insertion of disparity information into a video stream and to appropriately perform depth control of graphics.

Note that, in the present technology, for example, the disparity information obtaining unit may obtain, for each of the pictures, disparity information concerning each of partitioned regions on the basis of partition information concerning a picture display screen. In this case, the disparity information obtaining unit may partition the picture display screen such that a partitioned region does not cross an encoding block boundary, on the basis of the partition information concerning the picture display screen, and may obtain, for each of the pictures, disparity information concerning each of the partitioned regions.

Moreover, in this case, for example, the disparity information for each of the pictures, which is inserted into the video stream by the disparity information inserting unit, may include the partition information concerning the picture display screen and the disparity information concerning each of the partitioned regions. In this case, depth control of graphics to be overlaid and displayed on a three-dimensional image in a receiving side can be sufficiently performed in accordance with the display position of the graphics.

Moreover, in the present technology, for example, the image data transmitting unit may transmit the container by including, in the container, a subtitle stream which is obtained by encoding subtitle data having the disparity information corresponding to a display position. In this case, in a reception side, concerning the subtitle, depth control is performed on the basis of disparity information appended to the subtitle data. For example, even if there is no insertion of the above-described disparity information into the video stream, if there is subtitle data, disparity information appended to this subtitle data may be utilized for performing depth control of graphics.

Moreover, another concept of the present technology is a transmitting apparatus including:

an image data obtaining unit that obtains left-eye image data and right-eye image data which form a three-dimensional image;

a disparity information obtaining unit that obtains, for each of pictures of the obtained image data, disparity information concerning the left-eye image data with respect to the right-eye image data and concerning the right-eye image data with respect to the left-eye image data;

a disparity information inserting unit that inserts the obtained disparity information into a video stream which is obtained by encoding the obtained image data; and

an image data transmitting unit that transmits a container of a predetermined format which contains the video stream into which the disparity information is inserted.

In this transmitting apparatus, the disparity information obtaining unit obtains, for each of the pictures, the disparity information concerning each of partitioned regions on the basis of partition information concerning a picture display screen, and the disparity information for each of the pictures, which is inserted into the video stream by the disparity information inserting unit, includes the partition information concerning the picture display screen and the disparity information concerning each of the partitioned regions.

In the present technology, left-eye image data and right-eye image data which form a three-dimensional image are obtained by the image data obtaining unit. In this case, the image data is, for example, data obtained by capturing an image with a camera or by reading an image from a storage medium.

For each of pictures of the obtained image data, disparity information concerning the left-eye image data with respect to the right-eye image data and concerning the right-eye image data with respect to the left-eye image data is obtained by the disparity information obtaining unit. In this case, the disparity information is, for example, information generated on the basis of left-eye image data and right-eye image data or information read from a storage medium.

In this disparity information obtaining unit, for each of the pictures, the disparity information concerning each of partitioned regions is obtained on the basis of partition information concerning a picture display screen. In this case, for example, the disparity information obtaining unit may partition the picture display screen such that a partitioned region does not cross an encoding block boundary, on the basis of the partition information concerning the picture display screen, and may obtain, for each of the pictures, disparity information concerning each of partitioned regions.

The obtained disparity information is inserted, by the disparity information inserting unit, into a video stream which is obtained by encoding the obtained image data. In this manner, the disparity information for each of the pictures, which is inserted into the video stream by the disparity information inserting unit, includes the partition information concerning the picture display screen and the disparity information concerning each of the partitioned regions.

A container of a predetermined format which contains the video stream into which the disparity information is inserted is transmitted by the image data transmitting unit. For example, the container may be a transport stream (MPEG-2 TS) defined in the digital broadcasting standards. Alternatively, for example, the container may be MP4 used in the Internet distribution or another format of a container.

As described above, in the present technology, disparity information obtained for each picture of image data is inserted into a video stream, and then, the video stream is transmitted. Thus, depth control of graphics to be overlaid and displayed on a three-dimensional image in a receiving side can be sufficiently performed with the picture (frame) precision. Moreover, in the present technology, the disparity information for each of the pictures, which is inserted into the video stream, includes the partition information concerning the picture display screen and the disparity information concerning each of the partitioned regions. Accordingly, depth control of graphics to be overlaid and displayed on a three-dimensional image in a receiving side can be sufficiently performed in accordance with the display position of the graphics.

Note that, in the present technology, for example, the image data transmitting unit may transmit the container by including, in the container, a subtitle stream which is obtained by encoding subtitle data having the disparity information corresponding to a display position. In this case, in a reception side, concerning the subtitle, depth control is performed on the basis of disparity information appended to the subtitle data. For example, even if there is no insertion of the above-described disparity information into the video stream, if there is subtitle data, disparity information appended to this subtitle data may be utilized for performing depth control of graphics.

Moreover, still another concept of the present technology is a receiving apparatus including:

an image data receiving unit that receives a container of a predetermined format which contains a video stream, the video stream being obtained by encoding left-eye image data and right-eye image data which form a three-dimensional image, disparity information concerning the left-eye image data with respect to the right-eye image data and concerning the right-eye image data with respect to the left-eye image data being inserted into the video stream, the disparity information being obtained, for each of pictures of the image data, in accordance with each of a predetermined number of partitioned regions of a picture display screen;

an information obtaining unit that obtains, from the video stream contained in the container, the left-eye image data and the right-eye image data and also obtains the disparity information concerning each of the partitioned regions of each of the pictures of the image data;
a graphics data generating unit that generates graphics data for displaying graphics on an image; and
an image data processing unit that appends, for each of the pictures, by using the obtained image data, the obtained disparity information, and the generated graphics data, disparity corresponding to a display position of the graphics to be overlaid on a left-eye image and a right-eye image to the graphics, thereby obtaining data indicating a left-eye image on which the graphics is overlaid and data indicating a right-eye image on which the graphics is overlaid.

In the present technology, a container of a predetermined format which contains a video stream is received by the image data receiving unit. This video stream is obtained by encoding left-eye image data and right-eye image data which form a three-dimensional image. Moreover, disparity information concerning the left-eye image data with respect to the right-eye image data and concerning the right-eye image data with respect to the left-eye image data is inserted into the video stream. The disparity information is obtained, for each of pictures of the image data, in accordance with each of a predetermined number of partitioned regions of a picture display screen.

By the information obtaining unit, from the video stream contained in the container, the left-eye image data and the right-eye image data is obtained, and also, the disparity information concerning each of the partitioned regions of each of the pictures of the image data is obtained. Moreover, graphics data for displaying graphics on an image is generated by the graphics data generating unit. This graphics is, for example, OSD graphics, application graphics, or the like, or EPG information indicating the service content.

By using the obtained image data, the obtained disparity information, and the generated graphics data, data indicating a left-eye image on which the graphics is overlaid and data indicating a right-eye image on which the graphics is overlaid are obtained by the image data processing unit. In this case, for each of the pictures, disparity corresponding to a display position of the graphics to be overlaid on a left-eye image and a right-eye image is appended to the graphics, thereby obtaining data indicating a left-eye image on which the graphics is overlaid and data indicating a right-eye image on which the graphics is overlaid. For example, in the image data processing unit, by utilizing an item of disparity information selected from among items of disparity information of a predetermined number of partitioned regions corresponding to a display position of the graphics, for example, by utilizing optimal disparity information, such as the minimum value, disparity may be appended to this graphics.

As described above, in the present technology, on the basis of disparity information inserted into a video stream transmitted from a transmission side, depth control of graphics to be overlaid and displayed on a three-dimensional image is performed. In this case, disparity information obtained for each picture of image data is inserted into a video stream, and thus, depth control of graphics can be sufficiently performed with the picture (frame) precision. Moreover, in this case, the disparity information for each of the pictures, which is inserted into the video stream, includes the partition information concerning the picture display screen and the disparity information concerning each of the partitioned regions. Accordingly, depth control of graphics can be sufficiently performed in accordance with the display position of the graphics.

Note that, in the present technology, for example, identification information for identifying whether or not there is an insertion of the disparity information into the video stream may be inserted into a layer of the container. The receiving apparatus may further include an identification information obtaining unit that obtains the identification information from the container. When the obtained identification information indicates that there is an insertion of the disparity information, the information obtaining unit may obtain the disparity information from the video stream contained in the container. For example, when the obtained identification information indicates that there is no insertion of the disparity information, the image data processing unit may utilize calculated disparity information. In this case, it is possible to easily identify whether or not there is an insertion of disparity information into a video stream and to appropriately perform depth control of graphics.

Moreover, in the present technology, for example, when a subtitle is displayed together with display of the graphics, the image data processing unit may append disparity to the graphics so that the graphics will be displayed in front of the subtitle. In this case, the graphics can be displayed in a good manner without blocking the display of the subtitle.

Moreover, in the present technology, the receiving apparatus may further include: a disparity information updating unit that updates the disparity information, which is obtained by the information obtaining unit, concerning each of the partitioned regions of each of the pictures of the image data in accordance with overlaying of the graphics on an image; and a disparity information transmitting unit that transmits this updated disparity information to an external device to which the image data obtained by the image data processing unit is transmitted.

Advantageous Effects of Invention

According to the present technology, it is possible to sufficiently perform depth control of graphics to be overlaid and displayed on a three-dimensional image in a receiving side. Brief Description of Drawings
[Fig. 1] Fig. 1 is a block diagram illustrating an example of the configuration of an image transmitting/receiving system, which serves as an embodiment.

[Fig. 2] Fig. 2 is a diagram illustrating an example of disparity information (disparity vector) concerning each block (Block).

[Fig. 3] Fig. 3 shows diagrams illustrating an example of a method for generating disparity information in units of blocks.

[Fig. 4] Fig. 4 shows diagrams illustrating an example of downsizing processing for obtaining disparity information concerning a predetermined partitioned region from items of disparity information concerning individual blocks.

[Fig. 5] Fig. 5 is a diagram illustrating that a picture display screen is partitioned such that a partitioned region does not cross an encoding block boundary.

[Fig. 6] Fig. 6 is a diagram schematically illustrating an example of transition of items of disparity information concerning individual partitioned regions of each picture.

[Fig. 7] Fig. 7 shows diagrams illustrating timings at which disparity information obtained for each of pictures of image data is inserted into a video stream.

[Fig. 8] Fig. 8 is a block diagram illustrating an example of the configuration of a transmission data generating unit which generates a transport stream in a broadcasting station.

[Fig. 9] Fig. 9 is a diagram illustrating an example of the configuration of a transport stream.

[Fig. 10] Fig. 10 shows diagrams illustrating an example of a structure (Syntax) of an AVC video descriptor and the major definition content (semantics).

[Fig. 11] Fig. 11 shows diagrams illustrating an example of a structure (Syntax) of an MVC extension descriptor and the major definition content (semantics).

[Fig. 12] Fig. 12 shows diagrams illustrating an example of a structure (Syntax) of a graphics depth info descriptor (graphics_depth_info_descriptor) and the major definition content (semantics).

[Fig. 13] Fig. 13 illustrates an example of an access unit which is positioned at the head of a GOP and an example of an access unit which is not positioned at the head of a GOP when the encoding method is AVC.

[Fig. 14] Fig. 14 shows diagrams illustrating an example of a structure (Syntax) of "depth_information_for_graphics SEI message" and an example of a structure (Syntax) of "depth_information_for_graphics_data()".

[Fig. 15] Fig. 15 is a diagram illustrating an example of a structure (Syntax) of "depth_information_for_graphics()" when disparity information for each picture is inserted in units of pictures.

[Fig. 16] Fig. 16 is a diagram illustrating the content (Semantics) of major information in the example of the structure (Syntax) of "depth_information_for_graphics()".

[Fig. 17] Fig. 17 shows diagrams illustrating examples of partitioning of a picture display screen.

[Fig. 18] Fig. 18 is a diagram illustrating an example of a structure (Syntax) of "depth_information_for_graphics()" of disparity information for each picture when a plurality of pictures are encoded together.

[Fig. 19] Fig. 19 is a diagram illustrating the content (Semantics) of major information in the example of the structure (Syntax) of "depth_information_for_graphics()".

[Fig. 20] Fig. 20 shows diagrams illustrating an example of a structure (Syntax) of "user_data()" and an example of a structure (Syntax) of "depth_information_for_graphics_data()".

[Fig. 21] Fig. 21 shows diagrams illustrating the concept of depth control of graphics utilizing disparity information.

[Fig. 22] Fig. 22 is a diagram indicating that items of disparity information are sequentially obtained in accordance with picture timings of image data when disparity information is inserted in a video stream in units of pictures.

[Fig. 23] Fig. 23 is a diagram indicating that items of disparity information of individual pictures within a GOP are obtained together in accordance with the timing of the head of a GOP of image data when disparity information is inserted in a video stream in units of GOPs.

[Fig. 24] Fig. 24 is a diagram illustrating a display example of a subtitle and OSD graphics on an image.

[Fig. 25] Fig. 25 is a block diagram illustrating an example of the configuration of a decoding unit of a television receiver.

[Fig. 26] Fig. 26 is a block diagram illustrating control performed by a depth control unit.

[Fig. 27] Fig. 27 is a flowchart (1/2) illustrating an example of a procedure of control processing performed by the depth control unit.

[Fig. 28] Fig. 28 is a flowchart (2/2) illustrating an example of a procedure of control processing performed by the depth control unit.

[Fig. 29] Fig. 29 is a diagram illustrating an example of depth control of graphics in a television receiver.

[Fig. 30] Fig. 30 is a diagram illustrating another example of depth control of graphics in a television receiver.

[Fig. 31] Fig. 31 is a block diagram illustrating another example of the configuration of an image transmitting/receiving system.

[Fig. 32] Fig. 32 is a block diagram illustrating an example of the configuration of a set top box.

[Fig. 33] Fig. 33 is a block diagram illustrating an example of the configuration of a system utilizing HDMI of a television receiver.

[Fig. 34] Fig. 34 is a diagram illustrating an example of depth control of graphics in a television receiver.
[Fig. 35] Fig. 35 is a diagram illustrating, in three-dimensional image display utilizing binocular disparity, the relationship between display positions of a left image and a right image forming an object on a screen and a playback position of a three-dimensional image of the object.

Description of Embodiments

Modes for carrying out the invention (hereinafter referred to as "embodiments") will be described below. A description will be given in the following order.

1. Embodiment

2. Modified Example

<1. Embodiment>

[Image Transmitting/Receiving System]

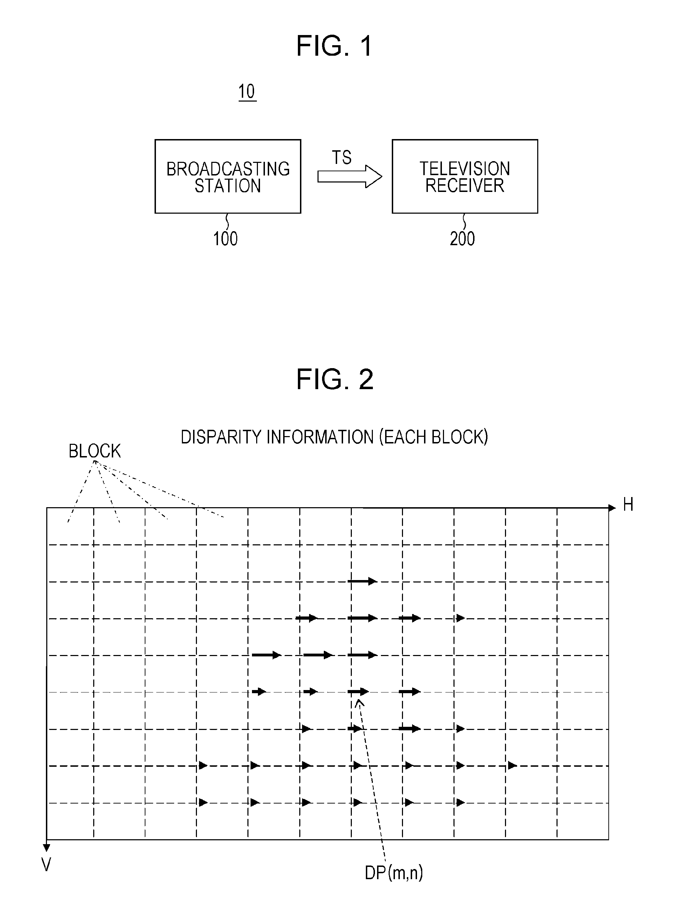

Fig. 1 illustrates an example of the configuration of an image transmitting/receiving system 10, which serves as an embodiment. This image transmitting/receiving system 10 includes a broadcasting station 100 and a television receiver 200.

"Description of Broadcasting Station"

The broadcasting station 100 transmits, through broadcasting waves, a transport stream TS, which serves as a container. This transport stream TS contains a video data stream obtained by encoding left-eye image data and right-eye image data which form a three-dimensional image. For example, left-eye image data and right-eye image data are transmitted through one video stream. In this case, for example, the left-eye image data and the right-eye image data are subjected to interleaving processing so that they may be formed as side-by-side mode image data or top-and-bottom mode image data and may be contained in one video stream.

Alternatively, for example, the left-eye image data and the right-eye image data are transmitted through different video streams. In this case, for example, the left-eye image data is contained in an MVC base-view stream, while the right-eye image data is contained in an MVC nonbase-view stream.

In a video stream, disparity information (Disparity data), which is obtained for each of pictures of image data, concerning the left-eye image data with respect to the right-eye image data and concerning the right-eye image data with respect to the left-eye image data is inserted. Disparity information for each of the pictures is constituted by partition information concerning a picture display screen and disparity information concerning each of partitioned regions (Partition). If the playback position of an object is located in front of a screen, this disparity information is obtained as a negative value (see DPa of Fig. 35). On the other hand, if the playback position of an object is located behind a screen, this disparity information is obtained as a positive value (see DPc of Fig. 35).

The disparity information concerning each of partitioned regions is obtained by performing downsizing processing on disparity information concerning each block (Block). Fig. 2 illustrates an example of disparity information (disparity vector) concerning each block (Block).

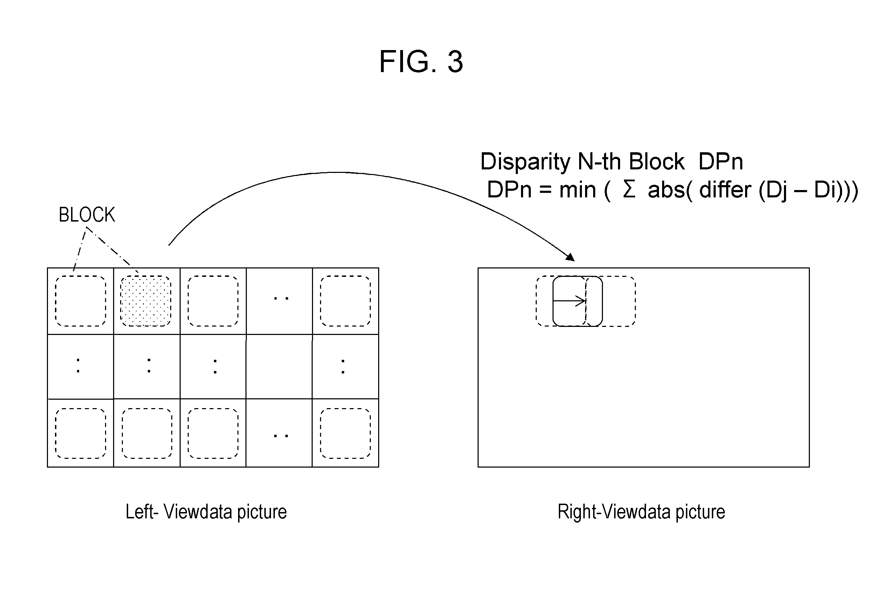

Fig. 3 illustrates an example of a method for generating disparity information in units of blocks. In this example, disparity information indicating a right-eye view (Right-View) is obtained from a left-eye view (Left-View). In this case, for example, pixel blocks (disparity detection blocks), such as 4*4, 8*8, or 16*16 blocks, are set in a left-eye view picture.

As shown in the drawing, disparity data is found as follows. A left-eye view picture is used as a detection image, and a right-eye view picture is used as a reference image. Then, for each of the blocks of the left-eye view picture, block search for a right-eye view picture is performed so that the sum of absolute difference values  between pixels may be minimized.

More specifically, disparity information $DP_n$ of an N-th block is found by performing block search so that the sum of absolute difference values in this N-th block may be minimized, for example, as indicated by the following equation (1). In equation (1), Dj denotes a pixel value in the right-eye view picture, and Di denotes a pixel value in the left-eye view picture.

$$DP_n = \min(\Sigma \; abs(differ \; (D_j - D_i))) \qquad \qquad \dots \; (1)$$

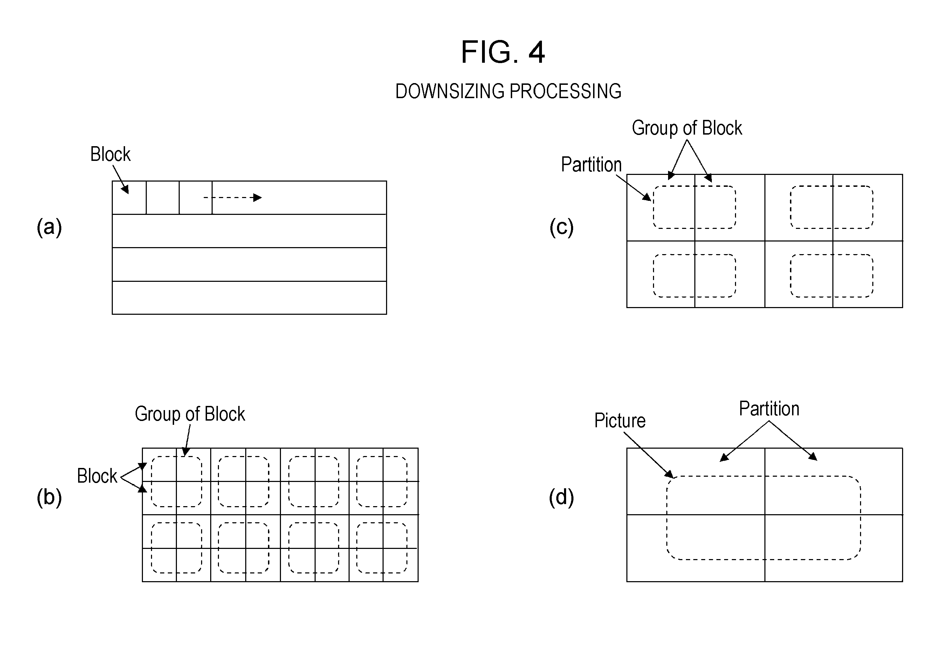

Fig. 4 illustrates an example of downsizing processing. Fig. 4(a) illustrates disparity information concerning each of the blocks which have been found as stated above. On the basis of this disparity information concerning each of the blocks, disparity information concerning each group (Group of Block) is found, as shown in Fig. 4(b). A group corresponds to a higher layer of blocks, and is obtained by grouping a plurality of adjacent blocks. In the example shown in Fig. 4(b), each group is constituted by four blocks surrounded by a broken frame. Then, a disparity vector of each group is obtained, for example, by selecting, from among items of disparity information concerning all the blocks within the group, an item of disparity information indicating the minimum value.

Then, on the basis of this disparity vector of each of the groups, disparity information concerning each partition (Partition) is found, as shown in Fig. 4(c). A partition corresponds to a higher layer of groups, and is obtained by grouping a plurality of adjacent groups. In the example shown in Fig. 4(c), each partition is constituted by two groups surrounded by a broken frame. Then, disparity information concerning each partition is obtained, for example, by selecting, from among items of disparity information concerning all the groups within the partition, an item of disparity information indicating the minimum value.

Then, on the basis of this disparity information concerning each partition, disparity information concerning the entire picture (the entire image) positioned on the highest layer is found, as shown in Fig. 4(d). In the example shown in Fig. 4(d), the entire picture includes four partitions surrounded by a broken frame. Then, disparity information concerning the entire picture is obtained, for example, by selecting, from among items of disparity information concerning all the partitions included in the entire picture, an item of disparity information indicating the minimum value.

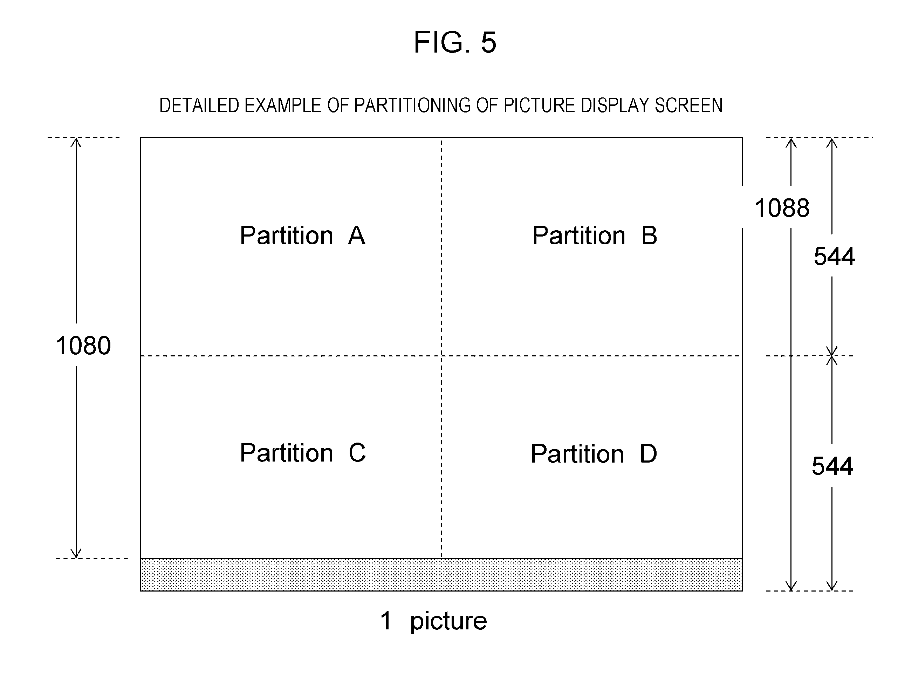

A picture display screen is partitioned on the basis of partition information, and disparity information concerning each partitioned region is obtained, as stated above. In this case, the picture display screen is partitioned such that a partitioned region does not cross an encoding block boundary. Fig. 5 illustrates a detailed example of partitioning of a picture display screen. In this example, a 1920*1080-pixel format is shown by way of example. The 1920*1080-pixel format is partitioned into two partitioned regions in each of the horizontal and vertical directions so as to obtain four partitioned regions, such as Partition A, Partition B, Partition C, and Partition D. Since, in a transmitting side, encoding is performed in units of 16x16 blocks, 8 lines constituted by blank data are added, and encoding is performed on the resulting 1920-pixel * 1088-line image data. Accordingly, concerning the vertical direction, the image data is partitioned into two regions on the basis of 1088 lines.

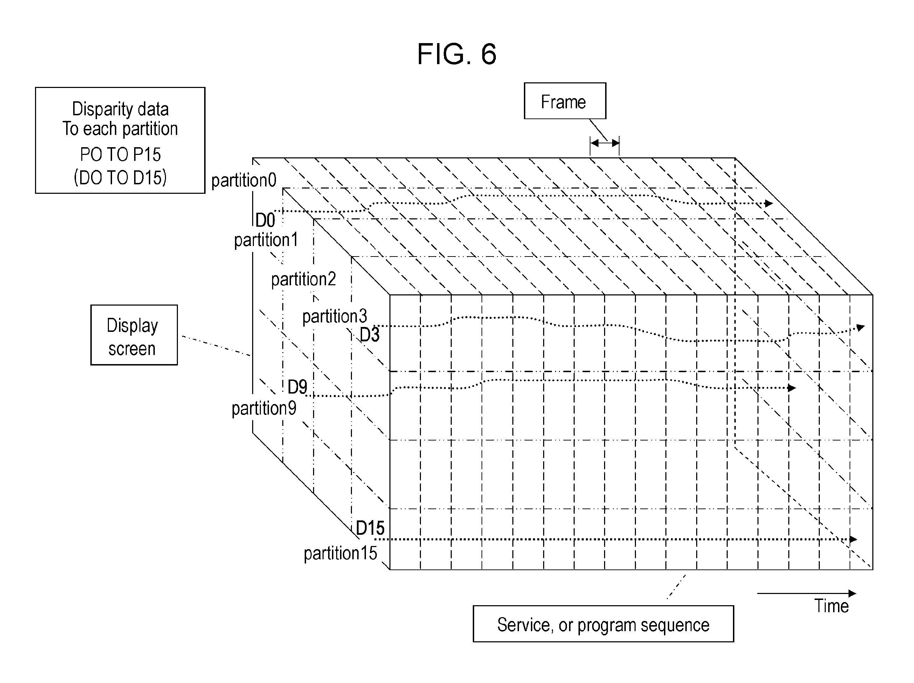

As stated above, disparity information concerning each partitioned region (Partition), which is obtained for each of pictures (frames) of image data, is inserted in a video stream. Fig. 6 schematically illustrates an example of transition of items of disparity information concerning individual partitioned regions. In this example, the picture display screen is partitioned into four partitioned regions in each of the horizontal and vertical directions, and as a result, there are 16 partitioned regions, such as Partition 0 through Partition 15. In this example, for the simplicity of the drawing, only the transitions of disparity information items D0, D3, D9, and D15 concerning Partition 0, Partition 3, Partition 9, and Partition 15, respectively, are shown. The values of the disparity information items may vary over time (D0, D3, and D9) or may be fixed (D15).

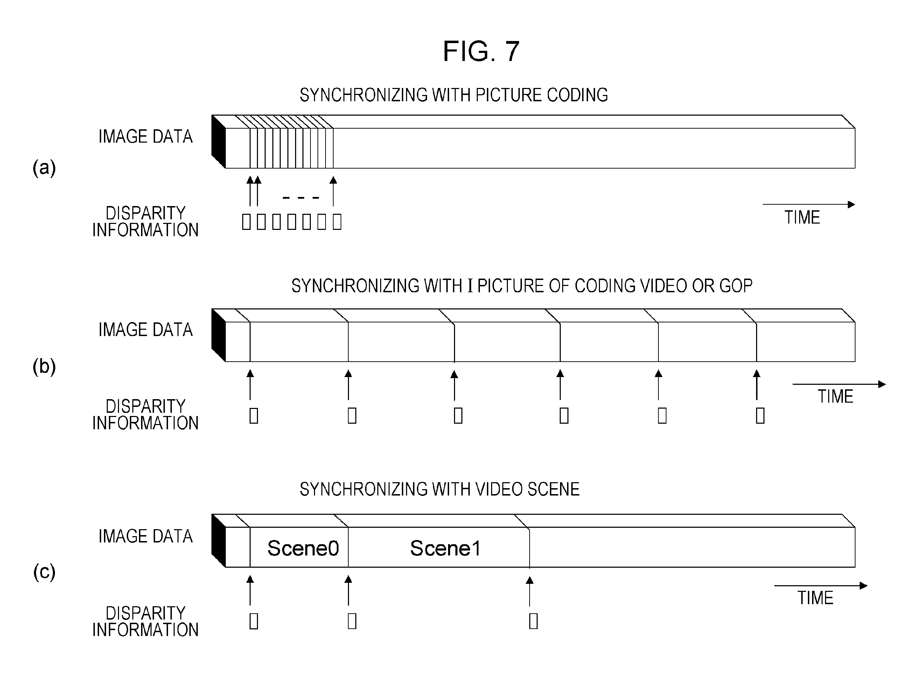

Disparity information, which is obtained for each of pictures of image data, is inserted in a video stream by using a unit, such as in units of pictures or in units of GOPs. Fig. 7(a) illustrates an example in which disparity information is inserted in synchronization with picture encoding, that is, an example in which disparity information is inserted into a video stream in units of pictures. In this example, only a small delay occurs when transmitting image data, and thus, this example is suitable for live broadcasting in which image data captured by a camera is transmitted.

Fig. 7(b) illustrates an example in which disparity information is inserted in synchronization with I pictures (Intra pictures) of encoding video or GOPs (Groups of Pictures), that is, an example in which disparity information is inserted into a video stream in units of GOPs. In this example, a larger delay occurs when transmitting image data than in the example of Fig. 7(a). However, disparity information concerning a plurality of pictures (frames) are transmitted at one time, thereby making it possible to reduce the number of processing times for obtaining disparity information at a receiving side. Fig. 7(c) illustrates an example in which disparity information is inserted in synchronization with video scenes, that is, an example in which disparity information is inserted into a video stream in units of scenes. The examples shown in Fig. 7(a) through Fig. 7(c) are only examples, and disparity information may be inserted by using another unit.

Moreover, identification information for identifying whether or not there is an insertion of disparity information into a video stream is inserted into a layer of a transport stream TS. This identification information is inserted, for example, under a program map table (PMT: Program Map Table) or an event information table (EIT: Event Information Table) contained in a transport stream TS. Due to this identification information, a receiving side is able to easily identify whether or not there is an insertion of disparity information into a video stream. Details of this identification information will be given later.

"Configuration Example of Transmission Data Generating Unit"

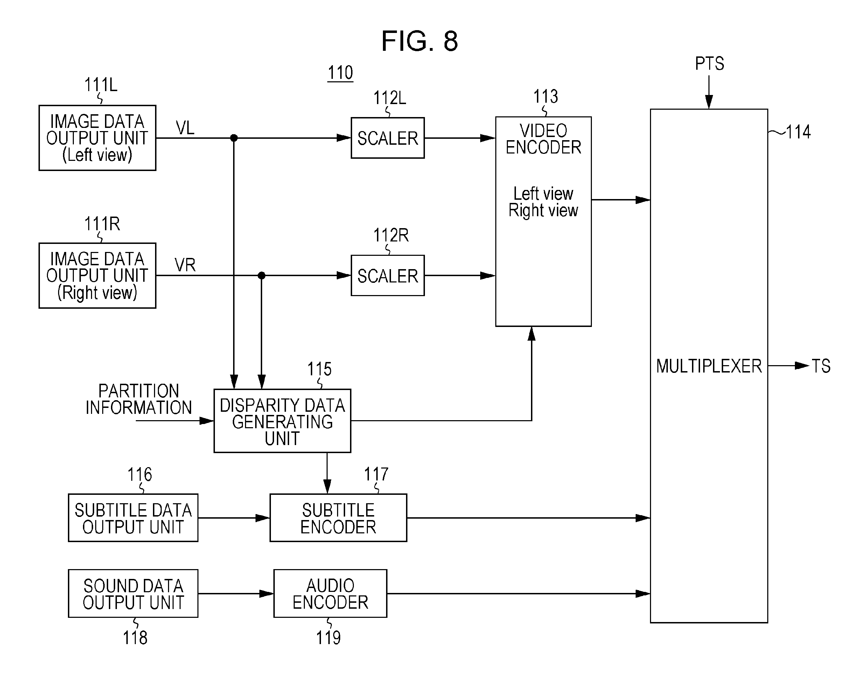

Fig. 8 illustrates an example of the configuration of a transmission data generating unit 110, which generates the above-described transport stream TS, in the broadcasting station 100. This transmission data generating unit 110 includes image data output units 111L and 111R, scalers 112L and 112R, a video encoder 113, a multiplexer 114, and a disparity data generating unit 115. This transmission data generating unit 110 also includes a subtitle data output unit 116, a subtitle encoder 117, a sound data output unit 118, and an audio encoder 119.

The image data output units 111L and 111R respectively output left-eye image data VL and right-eye image data VR forming a three-dimensional image. The image data output units 111L and 111R are constituted by, for example, a camera which captures an image of a subject and outputs image data, an image data reader which reads image data from a storage medium and outputs the read image data, or the like. The image data VL and the image data VR are each, for example, image data having a 1920*1080 full HD size.

The scalers 112L and 112R respectively perform scaling processing, according to the necessity, on image data VL and image data VR in the horizontal direction or in the vertical direction. For example, if side-by-side mode or top-and-bottom mode image data is formed in order to transmit the image data VL and the image data VR through one video stream, the scalers 112L and 112R respectively scale down the image data LV and the image data VR by 1/2 in the horizontal direction or in the vertical direction, and then output the scaled image data VL and the scaled image data VR. Alternatively, for example, if the image data VL and the image data VR are transmitted through different video streams, such as through an MVC base-view stream and an MVC nonbase-view stream, the scalers 112L and 112R respectively output the image data VL and the image data VR, as they are, without performing scaling processing.

The video encoder 113 performs encoding, for example, MPEG4-AVC (MVC), MPEG2video, HEVC, or the like, on the left-eye image data and the right-eye image data output from the scalers 112L and 112R, respectively, thereby obtaining encoded video data. This video encoder 113 also generates a video stream containing this encoded data by using a stream formatter (not shown), which is provided in the subsequent stage. In this case, the video encoder 113 generates one or two video streams (video elementary streams) containing the encoded video data of the left-eye image data and that of the right-eye image  data.

The disparity data generating unit 115 generates disparity information for each picture (frame) on the basis of the left-eye image data VL and the right-eye image data VR output from the image data output units 111L and 111R, respectively. The disparity data generating unit 115 obtains disparity information concerning each block (Block), as stated above, for each picture. Note that, if the image data output units 111L and 111R are constituted by an image data reader having a storage medium, the following configuration of the disparity data generating unit 115 may be considered, that is, it may obtain disparity information concerning each block (Block) by reading it from the storage medium together with image data. Moreover, the disparity data generating unit 115 performs downsizing processing on disparity information concerning each block (Block), on the basis of partition information concerning a picture display screen supplied through, for example, a user operation, thereby generating disparity information concerning each partitioned region (Partition).

The video encoder 113 inserts disparity information for each picture generated by the disparity data generating unit 115 into a video stream. In this case, disparity information for each picture is constituted by partition information concerning the picture display screen and disparity information concerning each partitioned region. In this case, for example, the disparity information for each picture is inserted into the video stream in units of pictures or in units of GOPs (see Fig. 7). Note that, if the left-eye image data and the right-eye image data are transmitted through different video data items, the disparity information may be inserted into only one of the video streams.

The subtitle data output unit 116 outputs data indicating a subtitle to be overlaid on an image. This subtitle data output unit 116 is constituted by, for example, a personal computer or the like. The subtitle encoder 117 generates a subtitle stream (subtitle elementary stream) containing the subtitle data output from the subtitle data output unit 116. Note that, the subtitle encoder 117 refers to disparity information concerning each block generated by the disparity data generating unit 115, and adds disparity information  corresponding to a display position of the subtitle to the subtitle data. That is, the subtitle data contained in the subtitle stream has disparity information corresponding to the display position of the subtitle.

The sound data output unit 118 outputs sound data corresponding to image data. This sound data output unit 118 is constituted by, for example, a microphone or a sound data reader which reads sound data from a storage medium and outputs the read sound data. The audio encoder 119 performs encoding, such as MPEG-2Audio, AAC, or the like, on the sound data output from the sound data output unit 118, thereby generating an audio stream (audio elementary stream).

The multiplexer 114 forms the elementary streams generated by the video encoder 113, the subtitle encoder 117, and the audio encoder 119 into PES packets and multiplexes the PES packets, thereby generating a transport stream TS. In this case, for enabling a receiving side to perform synchronous playback, PTS (Presentation Time Stamp) is inserted into the header of each PES (Packetized Elementary Stream) packet.

The multiplexer 114 inserts the above-described identification information into a layer of the transport stream TS. This identification information is to identify whether or not there is an insertion of disparity information into a video stream. This identification information is inserted, for example, under a program map table (PMT: Program Map Table), an event information table (EIT: Event Information Table), or the like, contained in the transport stream TS.

The operation of the transmission data generating unit 110 shown in Fig. 8 will be briefly discussed. Left-eye image data VL and right-eye image data VR forming a three-dimensional image respectively output from the image data output units 111L and 111R are respectively supplied to the scalers 112L and 112R. In the scalers 112L and 112R, scaling processing is performed, according to the necessity, on the image data VL and the image data VR, respectively, in the horizontal direction or in the vertical direction. The left-eye image data and the right-eye image data respectively output from the scalers 112L and 112R are supplied to the video encoder 113.

In the video encoder 113, encoding, for example, MPEG4-AVC (MVC), MPEG2video, HEVC, or the like, is performed on the left-eye image data and the right-eye image data, thereby obtaining encoded video data. In this video encoder 113, a video stream containing this encoded data is also generated by using a stream formatter (not shown), which is provided in the subsequent stage. In this case, one or two video streams (video elementary streams) containing the encoded video data of the left-eye image data and that of the right-eye image data are generated.

The left-eye image data VL and the right-eye image data VR forming a three-dimensional image respectively output from the image data output units 111L and 111R are also supplied to the disparity data generating unit 115. In this disparity data generating unit 115, disparity information is generated for each picture (frame) on the basis of the left-eye image data VL and the right-eye image data VR. In the disparity data generating unit 115, disparity information concerning each block (Block) is obtained for each picture. Further, in this disparity data generating unit 115, downsizing processing is performed on disparity information concerning each block (Block), on the basis of partition information concerning a picture display screen supplied through, for example, a user operation, thereby generating disparity information concerning each partitioned region (Partition).

The disparity information for each picture (including partition information concerning the picture display screen) generated by the disparity data generating unit 115 is supplied to the video encoder 113. In the video encoder 113, the disparity information for each picture is inserted into the video stream. In this case, for example, the disparity information for each picture is inserted into the video stream in units of pictures or in units of GOPs.

Moreover, from the subtitle data output unit 116, data indicating a subtitle to be overlaid on an image is output. This subtitle data is supplied to the subtitle encoder 117. In the subtitle encoder 117, a subtitle stream containing the subtitle data is generated. In this case, in the subtitle encoder 117, disparity information concerning each block generated by the disparity data generating unit 115 is checked, and disparity information corresponding to a display position is added to the subtitle data.

Moreover, from the sound data output unit 118, sound data corresponding to image data is output. This sound data is supplied to the audio encoder 119. In this audio encoder 119, encoding, such as MPEG-2Audio, AAC, or the like, is performed on the sound data, thereby generating an audio stream.

The video stream obtained by the video encoder 113, the subtitle stream obtained by the subtitle encoder 117, and the audio stream obtained by the audio encoder 119 are supplied to the multiplexer 114. In the multiplexer 114, the elementary streams supplied from the individual encoders are formed into PES packets and the PES packets are multiplexed, thereby generating a transport stream TS. In this case, for enabling a receiving side to perform synchronous playback, PTS is inserted into each PES header. Moreover, in the multiplexer 114, identification information for identifying whether or not there is an insertion of disparity information into a video stream is inserted under PMT, EIT, or the like.

[Identification Information, Structure of Disparity Information, and TS Configuration]

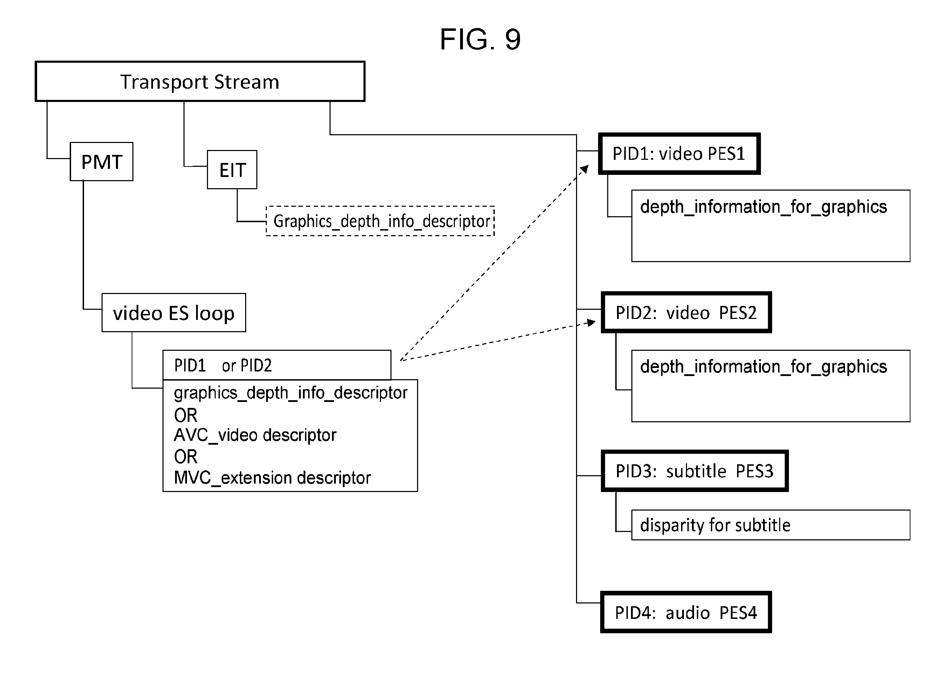

Fig. 9 illustrates an example of the configuration of a transport stream TS. In this configuration example, an example in which left-eye image data and right-eye image data are transmitted through different video streams is shown. That is, a PES packet "video PES1" of a video stream obtained by encoding left-eye image data and a PES packet "video PES2" of a video stream obtained by encoding right-eye image data are included. Moreover, in this configuration example, a PES packet "video PES3" of a subtitle stream obtained by encoding subtitle data (including disparity information) and a PES packet "video PES4" of an audio stream obtained by encoding sound data are included.

In a user data area of a video stream, depth information for graphics (depth_information_for_graphics()) including disparity information for each picture is inserted. For example, if disparity information for each picture is inserted in units of pictures, this depth information for graphics is inserted in a user data area of each picture of a video stream. Alternatively, for example, if disparity information for each picture is inserted in units of GOPs, this depth information for graphics is inserted into a user data area of the first picture of each GOP of a video stream. Note that, although this configuration example shows that depth information for graphics is inserted into each of the two video streams, it may be inserted into only one of the video streams.

PMT (Program Map Table) is contained in a transport stream TS as PSI (Program Specific Information). This PSI is information indicating to which program each elementary stream contained in the transport stream TS belongs. Additionally, EIT (Event Information Table) is contained in the transport stream TS as SI (Serviced Information) which manages event units.

Under PMT, there is an elementary loop having information related to each elementary stream. In this elementary loop, information, such as a packet identifier (PID), is disposed for each stream, and a descriptor describing information related to the associated elementary stream is also disposed.

The above-described identification information indicating whether or not disparity information is inserted in a video stream is described, for example, in a descriptor which is inserted under a video elementary loop of a program map table. This descriptor is, for example, an existing AVC video descriptor (AVC video descriptor), an existing MVC extension descriptor (MVC_extension_descriptor), or a newly defined graphics depth info descriptor (graphics_depth_info_descriptor). Note that graphics depth info descriptor may be inserted under EIT, as indicated by the broken lines in the drawing.

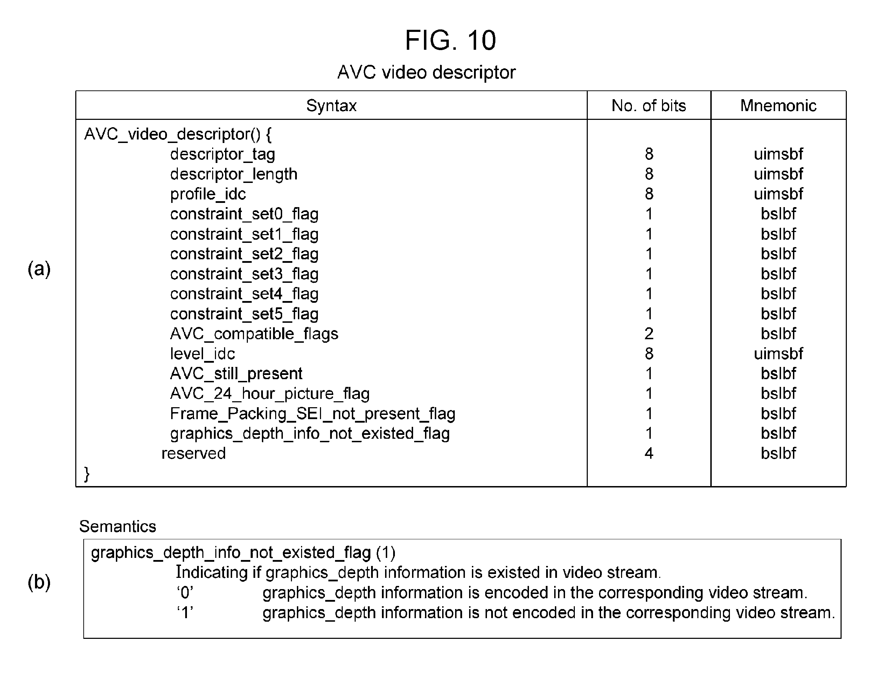

Fig. 10(a) illustrates an example of a structure (Syntax) of an AVC video descriptor (AVC video descriptor) in which identification information is described. This descriptor is applicable when video is an MPEG4-AVC Frame compatible format. This descriptor itself is already contained in the H.264/AVC standards. In this configuration, in the descriptor, one-bit flag information
"graphics depth_info_not_existed_flag" is newly defined.

This flag information indicates, as shown in the definition content (semantics) of Fig. 10(b), whether depth information for graphics (depth_information_for_graphics()) including disparity information for each picture is inserted in a corresponding video stream. When this flag information is "0", it indicates that depth information for graphics is inserted. On the other hand, when this flag information is "1", it indicates that depth information for graphics is not inserted.

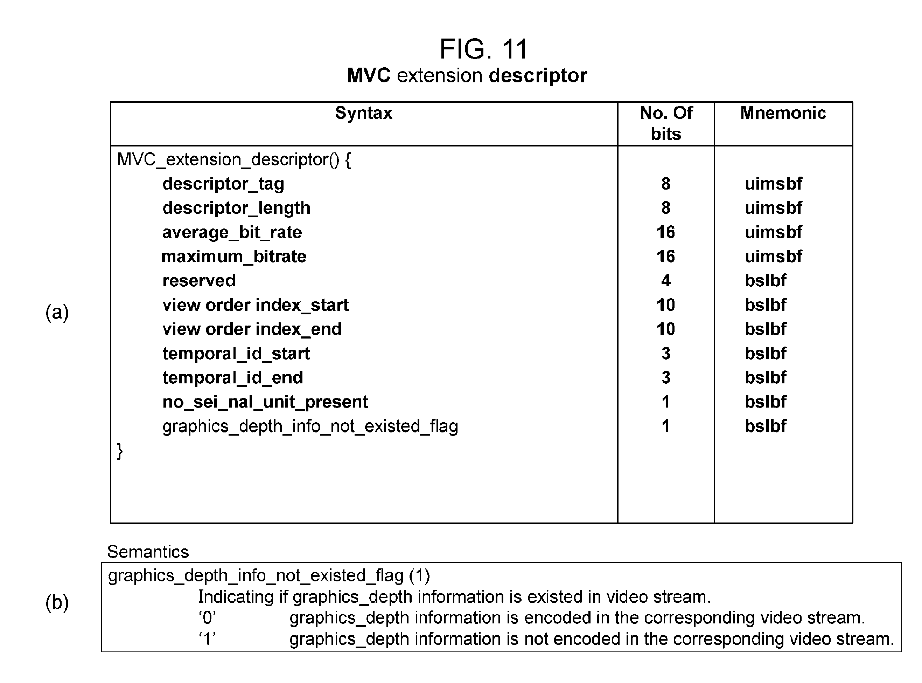

Fig. 11(a) illustrates an example of a structure (Syntax) of an MVC extension descriptor in which identification information is described. This descriptor is applicable when video is an MPEG4-AVC Annex H MVC format. This descriptor itself is already contained in the H.264/AVC standards. In this configuration, in the descriptor, one-bit flag information "graphics_depth_info_not_existed_flag" is newly defined.

This flag information indicates, as shown in the definition content (semantics) of Fig. 11(b), whether depth information for graphics (depth_information_for_graphics()) including disparity information for each picture is inserted in a corresponding video stream. When this flag information is "0", it indicates that depth information for graphics is inserted. On the other hand, when this flag information is "1", it indicates that depth information for graphics is not inserted.

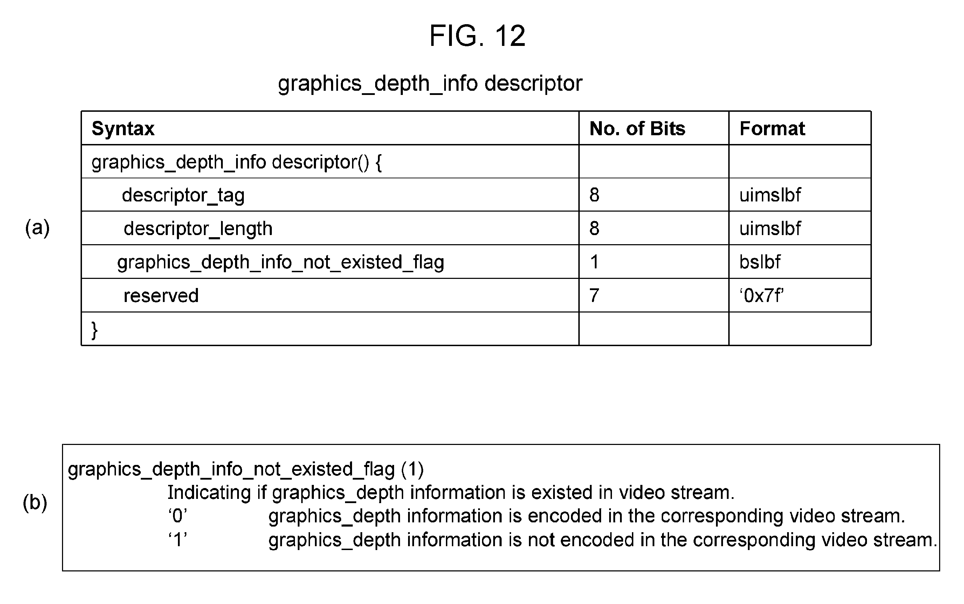

Fig. 12(a) illustrates an example of a structure (Syntax) of a graphics depth info descriptor (graphics_depth_info_descriptor). An 8-bit field "descriptor_tag" indicates that this descriptor is "graphics_depth_info_descriptor". An 8-bit field "descriptor_length" indicates the number of bytes of the subsequent data. In this descriptor, one-bit flag information "graphics_depth_info_not_existed_flag" is described.

This flag information indicates, as shown in the definition content (semantics) of Fig. 12(b), whether depth information for graphics (depth_information_for_graphics()) including disparity information for each picture is inserted in a corresponding video stream. When this flag information is "0", it indicates that depth information for graphics is inserted. On the other hand, when this flag information is "1", it indicates that depth information for graphics is not inserted.

Then, a description will be given of a case in which depth information for graphics (depth_information_for_graphics()) including disparity information for each picture is inserted into a user data area of a video stream.

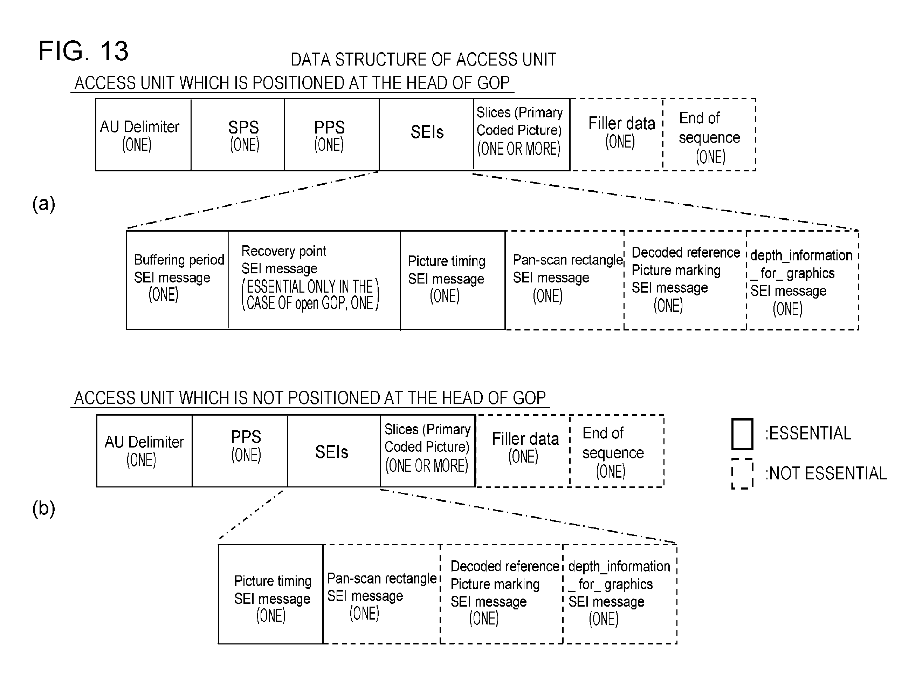

For example, if the encoding method is AVC,
"depth_information_for_graphics()" is inserted into "SELs" of an access unit as "depth_information_for_graphics SEI message". Fig. 13(a) illustrates an access unit which is positioned at the head of a GOP (Group of Pictures), and Fig. 13(b) illustrates an access unit which is not positioned at the head of a GOP. If disparity information for each picture is inserted in units of GOPs,
"depth_information_for_graphics SEI message" is inserted only into the access unit which is positioned at the head of a GOP.

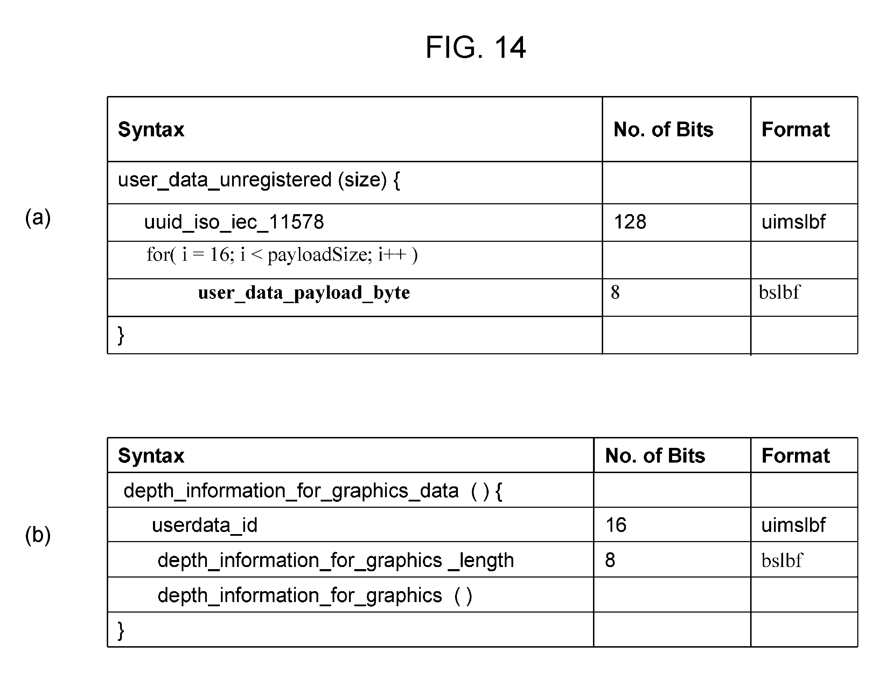

Fig. 14(a) illustrates an example of a structure (Syntax) of "depth_information_for_graphics SEI message". The field "uuid_iso_iec_11578" has an UUID value indicated by "ISO/IEC 11578:1996 AnnexA.". In the "user_data_payload_byte" field, "depth_information_for_graphics data()" is inserted. Fig. 14(b) illustrates an example of a structure (Syntax) of "depth_information_for_graphics_data()".In this structure, depth information for graphics (depth_information_for_graphics()) is inserted. The field "userdata_id" is an identifier of "depth_information_for_graphics()" indicated by unsigned 16 bits.

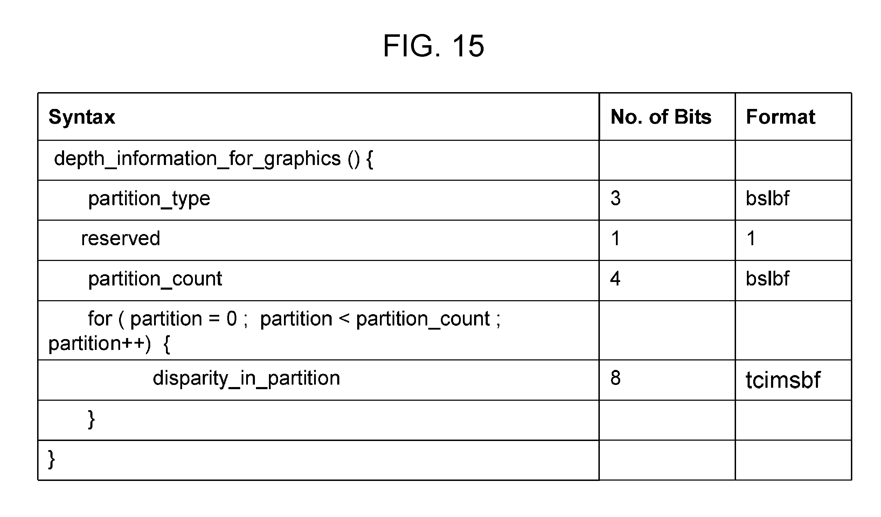

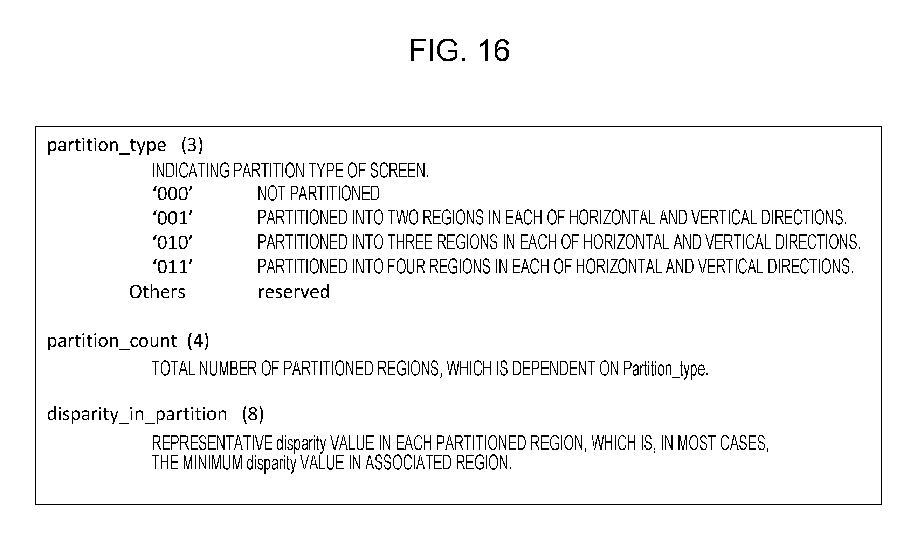

Fig. 15 illustrates an example of a structure (Syntax) of "depth_information_for_graphics()" when disparity information for each picture is inserted in units of pictures. Moreover, Fig. 16 illustrates the content (Semantics) of major information in the example of the structure shown in Fig. 15.

A 3-bit field "partition_type" indicates the partition type of picture display screen. "000" indicates that the picture display screen is not partitioned, "001" indicates that the picture display screen is partitioned into two regions in each of the horizontal direction and the vertical direction, "010" indicates that the picture display screen is partitioned into three regions in each of the horizontal direction and the vertical direction, and "011" indicates that the picture display screen is partitioned into four regions in each of the horizontal direction and the vertical direction.

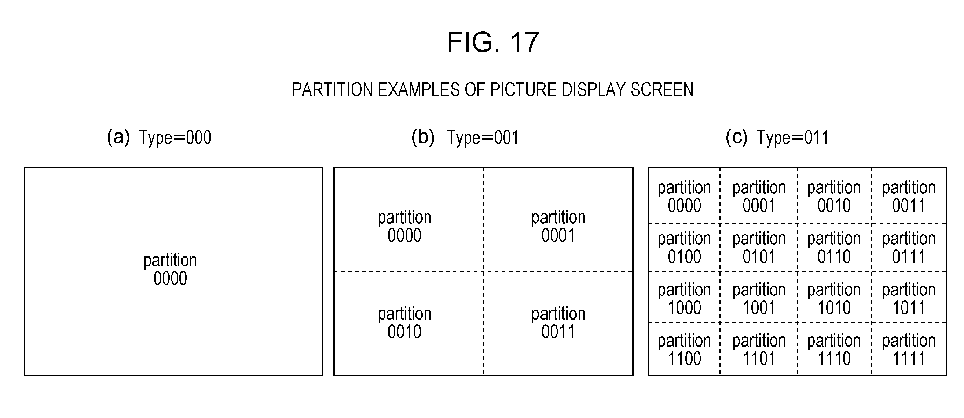

A 4-bit field "partition_count" indicates the total number of partitioned regions (Partitions), which is a value dependent on the above-described "partition_type". For example, in the case of "partition_type=000", the total number of partitioned regions (Partitions) is "1", as shown in Fig. 17(a). Moreover, for example, in the case of "partition_type=001", the total number of partitioned regions (Partitions) is "4", as shown in Fig. 17(b). Moreover, for example, in the case of "partition_type=011", the total number of partitioned regions (Partitions) is "16", as shown in Fig. 17(c).

An 8-bit field "disparity_in_partition" indicates representative disparity information (representative disparity value) concerning each partitioned region (Partition). In most cases, the representative disparity information is the minimum value of items of disparity information of the associated region.

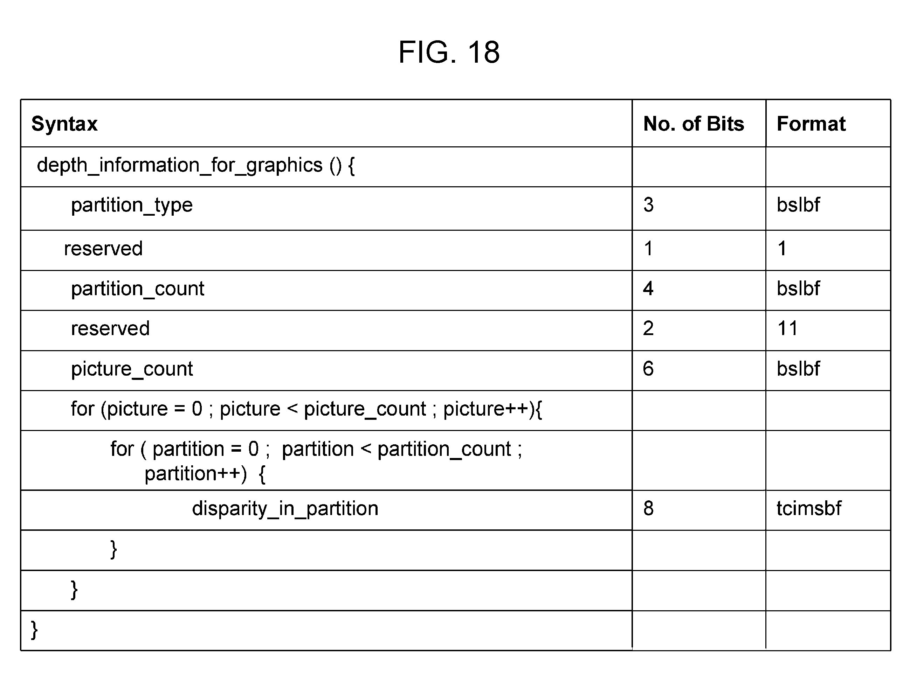

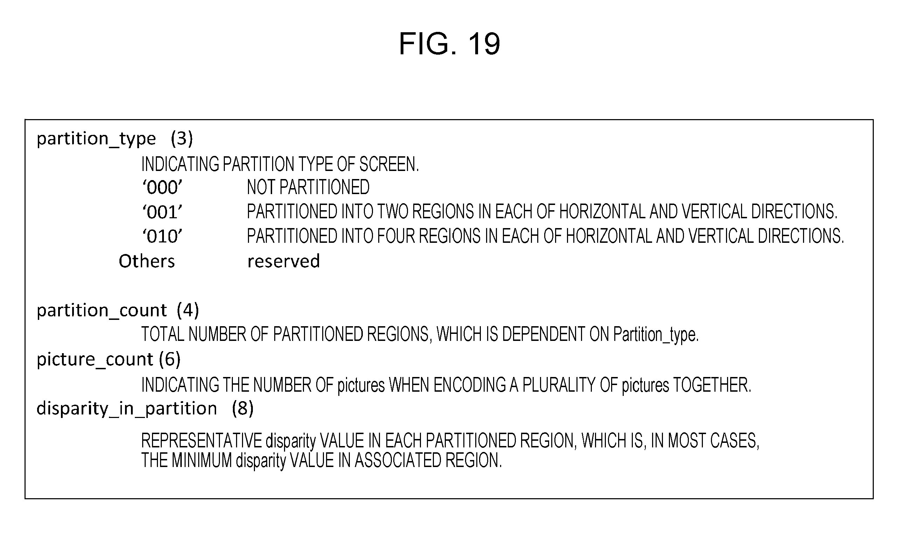

Fig. 18 illustrates an example of a structure (Syntax) of "depth_information_for_graphics()" when a plurality of pictures are encoded together, such as when disparity information for each picture is inserted in units of GOPs. Moreover, Fig. 19 illustrates the content (Semantics) of major information in the example of the structure shown in Fig. 18.

A 6-bit field "picture_count" indicates the number of pictures. In this "depth_information_for_graphics()", items of information "disparity_in_partition" concerning partitioned regions associated with the number of pictures are contained. Although a detailed explanation will be omitted, the other fields in the example of the structure shown in Fig. 18 are similar to those shown in Fig. 15.

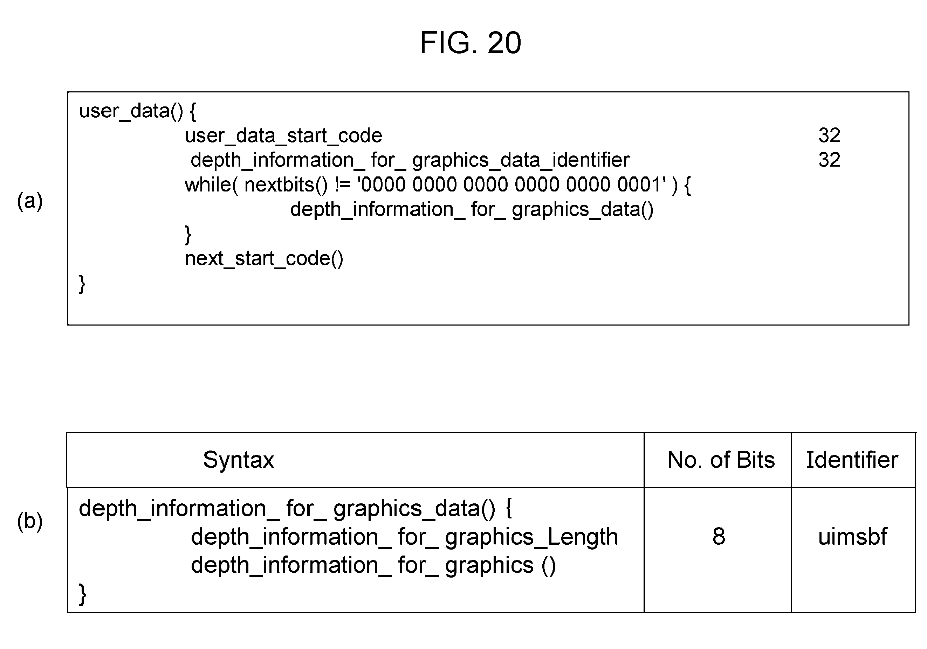

Moreover, if the encoding method is MPEG2 video, "depth_information_for_graphics()" is inserted into a user data area of a picture header as user data "user_data()". Fig. 20(a) illustrates an example of a structure (Syntax) of "user_data()". A 32-bit field "user_data_start_code" is a start code of user data (user_data), and is set as a fixed value "0x00000182".

A 32-bit field subsequent to this start code is an identifier for identifying the content of user data. In this case, the identifier is set as "depth_information_for_graphics_data_identifier", which makes it possible to identify that user data is

"depth_information_for_graphics_data". As the data body subsequent to this identifier, "depth_information_for_graphics_data()" is inserted.

Fig. 20(b) illustrates an example of a structure (Syntax) of "depth_information_for_graphics_data()".In this structure, "depth_information_for_graphics()" is inserted (see Figs. 15 and 18).

Note that an example in which disparity information is inserted into a video stream when the encoding method is AVC or MPEG2video has been discussed. Although a detailed explanation will be omitted, even in the case of another encoding method having a similar structure, for example, HEVC, or the like, the insertion of disparity information into a video stream can be performed with a similar structure.

"Description of Television Receiver"

The television receiver 200 receives a transport stream TS transmitted from the broadcasting station 100 through broadcasting waves. The television receiver 200 also decodes a video stream contained in this transport stream TS so as to generate left-eye image data and right-eye image data forming a three-dimensional image. The television receiver 200 also extracts disparity information for each of pictures of image data inserted into the video stream.

When overlaying and displaying graphics on an image, the television receiver 200 obtains data indicating a left-eye image and a right-eye image on which graphics is overlaid, by using image data and disparity information and by using graphics data. In this case, the television receiver 200 appends, for each picture, disparity corresponding to a display position of graphics to be overlaid on a left-eye image and a right-eye image to this graphics, thereby obtaining data indicating a left-eye image on which the graphics is overlaid and data indicating a right-eye image on which the graphics is overlaid.

As stated above, by appending disparity to graphics, graphics to be overlaid and displayed on a three-dimensional image can be displayed in front of an object of the three-dimensional image located at a display position of the graphics. Accordingly, when overlaying and displaying graphics, such as OSD graphics, application graphics, program information EPG graphics, or the like, on an image, perspective matching of graphics with respect to objects within an image can be maintained.

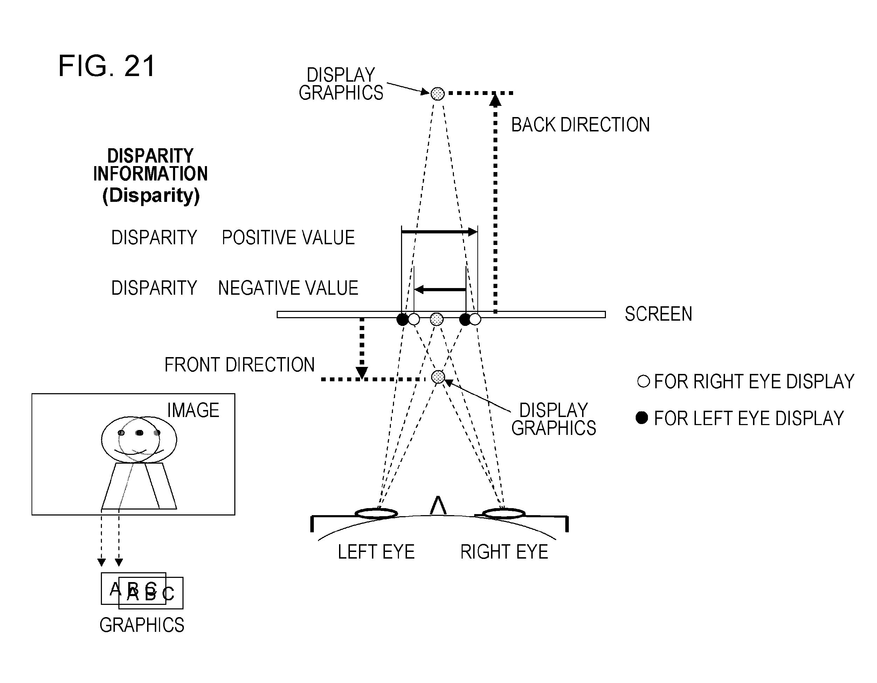

Fig. 21 illustrates the concept of depth control of graphics utilizing disparity information. If disparity information indicates a negative value, disparity is appended so that graphics for left-eye display may be displaced toward the right side on the screen and so that graphics for right-eye display may be displaced toward the left side on the screen. In this case, the display position of the graphics is in front of the screen. On the other hand, if disparity information indicates a positive value, disparity is appended so that graphics for left-eye display may be displaced toward the left side on the screen and so that graphics for right-eye display may be displaced toward the right side on the screen. In this case, the display position of the graphics is behind the screen.

As stated above, disparity information obtained for each of pictures of image data is inserted in a video stream. Accordingly, the television receiver 200 is able to perform depth control of graphics utilizing disparity information with high precision by the use of disparity information which matches the display timing of graphics.

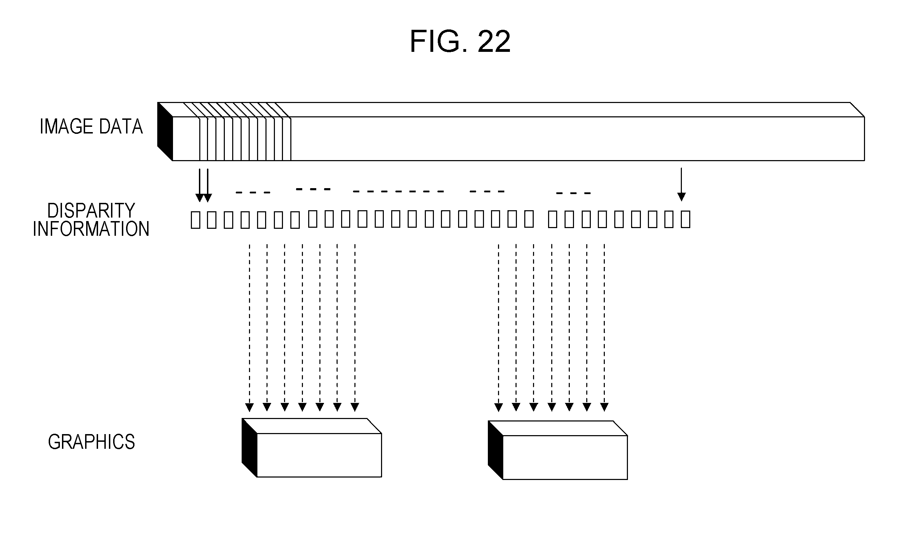

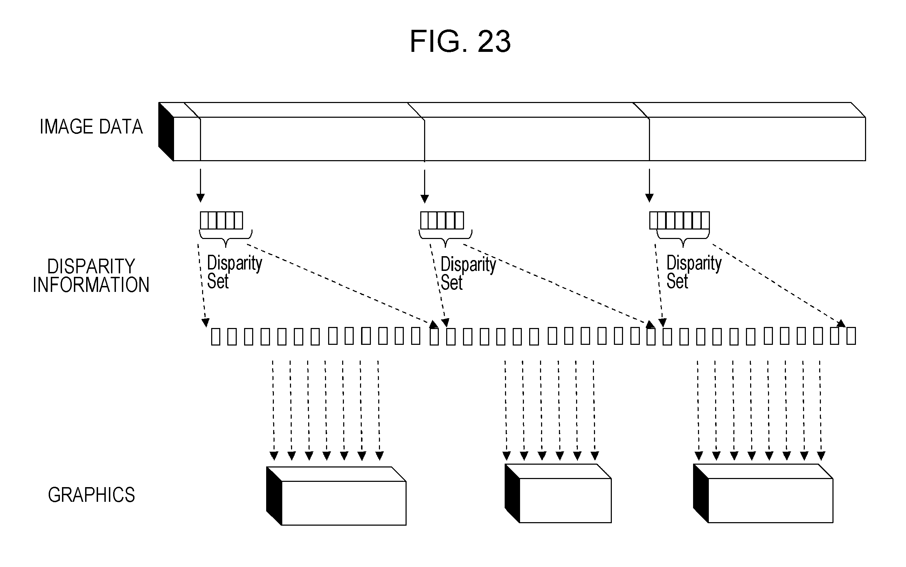

Fig. 22 illustrates an example in which disparity information is inserted in a video stream in units of pictures, and in the television receiver 200, items of disparity information are sequentially obtained in accordance with the picture timings of image data. When displaying graphics, disparity information which matches the display timing of graphics is used, and thus, suitable disparity can be appended to graphics. Moreover, Fig. 23 illustrates, for example, an example in which disparity information is inserted in a video stream in units of GOPs, and in the television receiver 200, items of disparity information (disparity information set) of individual pictures within a GOP are obtained together, in accordance with the timing of the head of the GOP of the image data. When displaying graphics, disparity information which matches the display timing of graphics is used, and thus, suitable disparity can be appended to graphics.

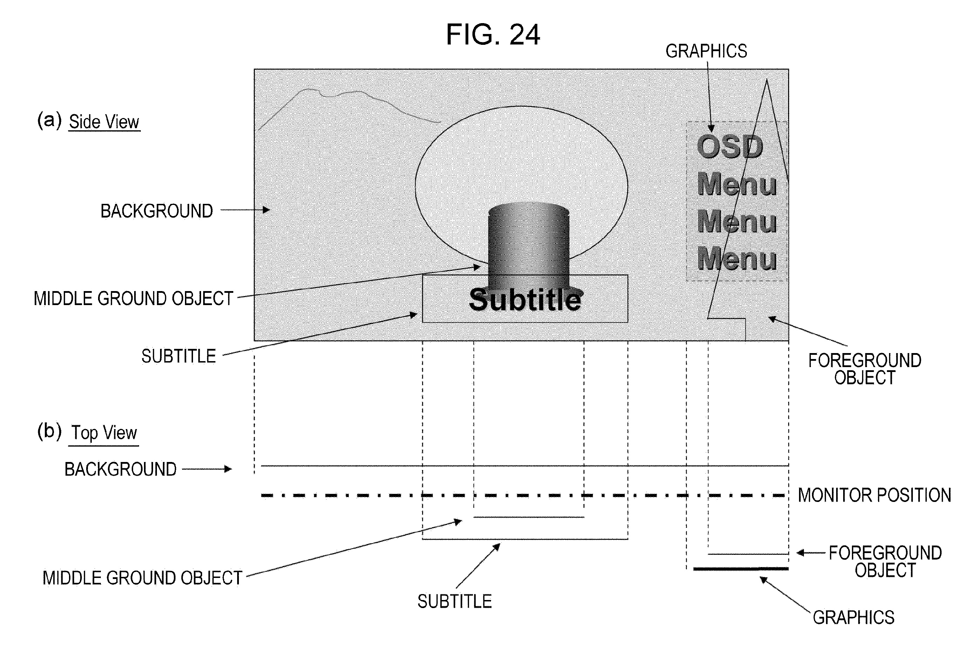

"Side View" in Fig. 24(a) shows a display example of a subtitle and OSD graphics on an image. This display example is an example in which a subtitle and graphics are overlaid on an image constituted by a background, a middle ground object, and a foreground object. "Top View" in Fig. 24(b) shows the perspective of the background, the middle ground object, the foreground object, the subtitle, and the graphics. Fig. 24(b) shows that it can be observed that the subtitle and the graphics are located in front of the objects located at the display positions of the subtitle and the graphics. Note that, although it is not shown, if the display position of the subtitle overlaps that of the graphics, suitable disparity is appended to the graphics so that, for example, it can be observed that the graphics is located in front of the subtitle.

"Configuration Example of Decoder of Television Receiver"

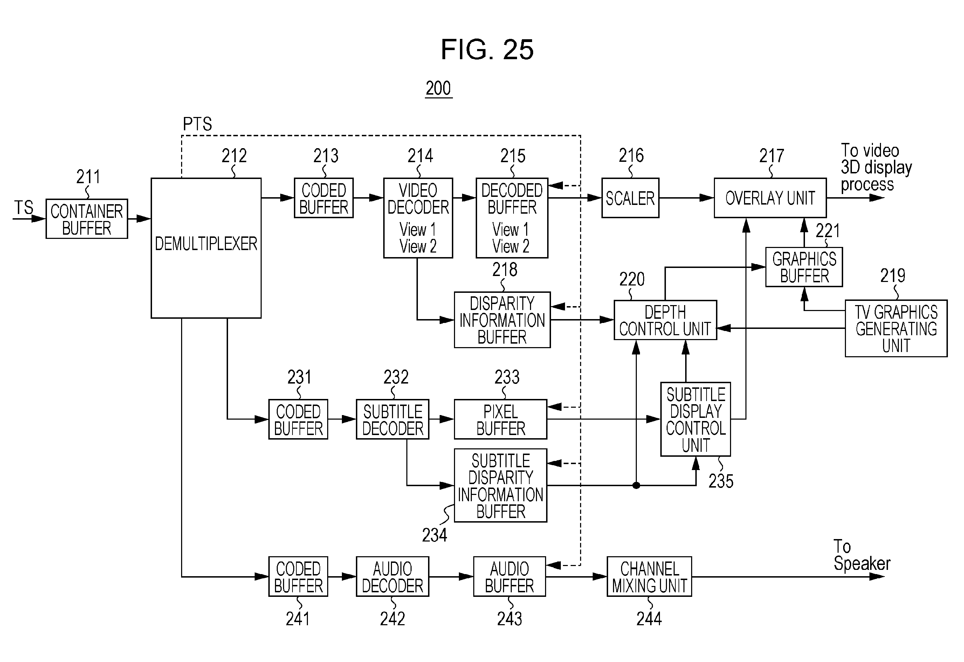

Fig. 25 illustrates an example of the configuration of the television receiver 200. The television receiver 200 includes a container buffer 211, a demultiplexer 212, a coded buffer 213, a video decoder 214, a decoded buffer 215, a scaler 216, and an overlay unit 217.

The television receiver 200 also includes a disparity information buffer 218, a television (TV) graphics generating unit 219, a depth control unit 220, and a graphics buffer 221. The television receiver 200 also includes a coded buffer 231, a subtitle decoder 232, a pixel buffer 233, a subtitle disparity information buffer 234, and a subtitle display control unit 235. The television receiver 200 also includes a coded buffer 241, an audio decoder 242, an audio buffer 243, and a channel mixing unit 244.

The container buffer 211 temporarily stores therein a transport stream TS received by a digital tuner or the like. In this transport stream TS, a video stream, a subtitle stream, and an audio stream are contained. As the video stream, one or two video streams obtained by encoding left-eye image data and right-eye image data are contained.

For example, side-by-side mode image data or top-and-bottom mode image data may be formed from left-eye image data and right-eye image data, in which case, the left-eye image data and the right-eye image data may be transmitted through one video stream. Alternatively, for example, the left-eye image data and the right-eye image data may be transmitted through different video streams, such as through an MVC base-view stream and an MVC nonbase-view stream.

The demultiplexer 212 extracts individual streams, that is, video, subtitle, and audio streams, from the transport stream TS temporarily stored in the container buffer 211. The demultiplexer 212 also extracts, from the transport stream TS, identification information (flag information of "graphics_depth_info_not_existed_flag") indicating whether or not disparity information is inserted in the video stream, and transmits the identification information to a control unit (CPU), which is not shown. When the identification information indicates that disparity information is inserted, the video decoder 214 obtains the disparity information from the video stream under the control of the control unit (CPU), which will be discussed later.

The coded buffer 213 temporarily stores therein the video stream extracted by the demultiplexer 212. The video decoder 214 performs decoding processing on the video stream stored in the coded buffer 213, thereby obtaining left-eye image data and right-eye image data. The video decoder 214 also obtains disparity information for each picture of image data inserted in the video stream. In the disparity information for each picture, partition information concerning a picture display screen and disparity information (disparity) concerning each partitioned region (Partition) are contained. The decoded buffer 215 temporarily stores therein the left-eye image data and the right-eye image data obtained by the video decoder 214. Moreover, the disparity information buffer 218 temporarily stores therein the disparity information for each picture of image data obtained by the video decoder 214.

The scaler 216 performs scaling processing, according to the necessity, on the left-eye image data and the right-eye image data output from the decoded buffer 215 in the horizontal direction or in the vertical direction. For example, if the left-eye image data and the right-eye image data are transmitted through one video stream as side-by-side mode or top-and-bottom mode image data, the scaler 116 scales up the left-eye image data and the right-eye image data by 1/2 in the horizontal direction or in the vertical direction, and then outputs the scaled left-eye image data and the scaled right-eye image data. Alternatively, for example, if the left-eye image data and the right-eye image data are transmitted through different video streams, such as through an MVC base-view stream and an MVC nonbase-view stream, the scaler 116 outputs the left-eye image data and the right-eye image data, as they are, without performing scaling processing.

The coded buffer 231 temporarily stores therein the subtitle stream extracted by the demultiplexer 214. The subtitle decoder 232 performs processing reverse to the processing performed by the above-described subtitle encoder 117 of the transmission data generating unit 110 (see Fig. 8). That is, the subtitle decoder 232 performs decoding processing on the subtitle stream stored in the coded buffer 231, thereby obtaining subtitle data.

In this subtitle data, bitmap data indicating a subtitle, display position information "Subtitle rendering position (x2, y2)" concerning this subtitle, and disparity information "Subtitle disparity" concerning the subtitle are contained. The pixel buffer 233 temporarily stores therein the bitmap data indicating the subtitle and the display position information "Subtitle rendering position (x2, y2)" concerning the subtitle obtained by the subtitle decoder 232. The subtitle disparity information buffer 234 temporarily stores therein disparity information "Subtitle disparity" concerning the subtitle obtained by the subtitle decoder 232.

On the basis of the bitmap data indicating the subtitle, and the display position information and the disparity information concerning this subtitle, the subtitle display control unit 235 generates bitmap data "Subtitle data" indicating a subtitle for left-eye display provided with disparity and bitmap data "Subtitle data" indicating a subtitle for right-eye display provided with disparity. The television graphics generating unit 219 generates graphics data, such as OSD graphics data, application graphics data, or the like. In this graphics data, graphics bitmap data "Graphics data" and display position information "Graphics rendering position (x1, y1)" concerning this graphics are contained.

The graphics buffer 221 temporarily stores therein graphics bitmap data "Graphics data" generated by the television graphics generating unit 219. The overlay unit 217 overlays bitmap data "Subtitle data" indicating the subtitle for left-eye display and bitmap data "Subtitle data" indicating the subtitle for right-eye display generated by the subtitle display control unit 235 on the left-eye image data and the right-eye image data, respectively.

The overlay unit 217 also overlays the graphics bitmap data "Graphics data" stored in the graphics buffer 221 on the left-eye image data and the right-eye image data. In this case, disparity is appended, by the depth control unit 220, which will be discussed later, to the graphics bitmap data "Graphics data" to be overlaid on each of the left-eye image data and the right-eye image data. In this case, if the graphics bitmap data "Graphics data" has the same pixels as those of the subtitle bitmap data "Subtitledata", the overlay unit 217 overwrites the subtitle data with the graphics data.

The depth control unit 220 appends disparity to the graphics bitmap data "Graphics data" to be overlaid on each of the left-eye image data and the right-eye image data. Thus, the depth control unit 220 generates, for each of pictures of image data, display position information "Rendering position" concerning graphics for left-eye display and graphics for right-eye display, and performs shift control of overlay positions at which the graphics bitmap data "Graphics data" stored in the graphics buffer 221 will be overlaid on the left-eye image data and the right-eye image data.

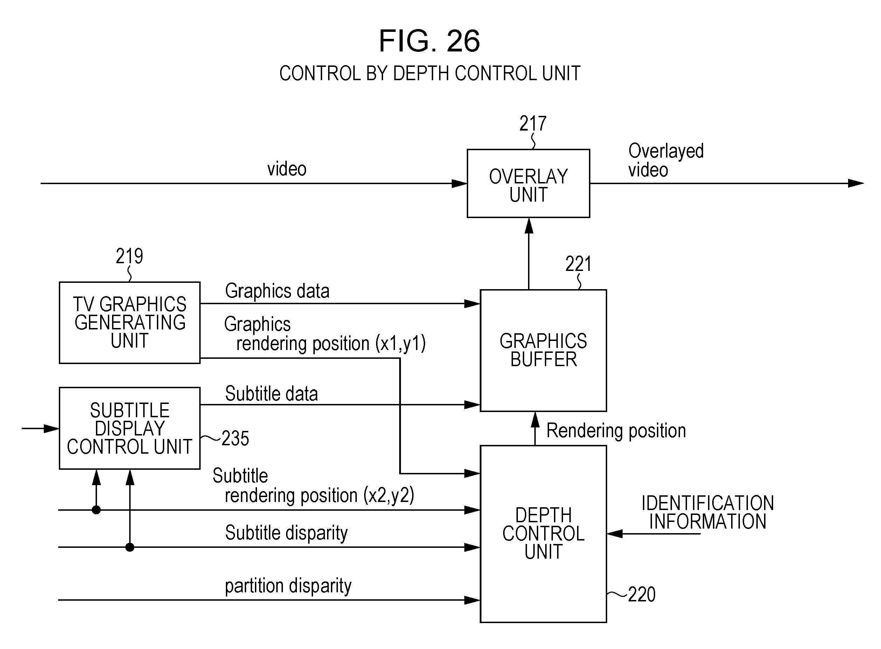

The depth control unit 220 generates, as shown in Fig. 26, display position information "Rendering position" by utilizing the following items of information. That is, the depth control unit 220 utilizes disparity information (Disparity) concerning each of the partitioned regions (Partitions) of each picture of image data stored in the disparity information buffer 218. The depth control unit 220 also utilizes display position information "Subtitle rendering position (x2, y2)" concerning the subtitle stored in the pixel buffer 233.

The depth control unit 220 also utilizes disparity information "Subtitle disparity" concerning the subtitle stored in the subtitle disparity information buffer 234. The depth control unit 220 also utilizes display position information "Graphics rendering position (x1, y1) concerning graphics generated by the television graphics generating unit 219. The depth control unit 220 also utilizes identification information indicating whether or not disparity information is inserted in a video stream.

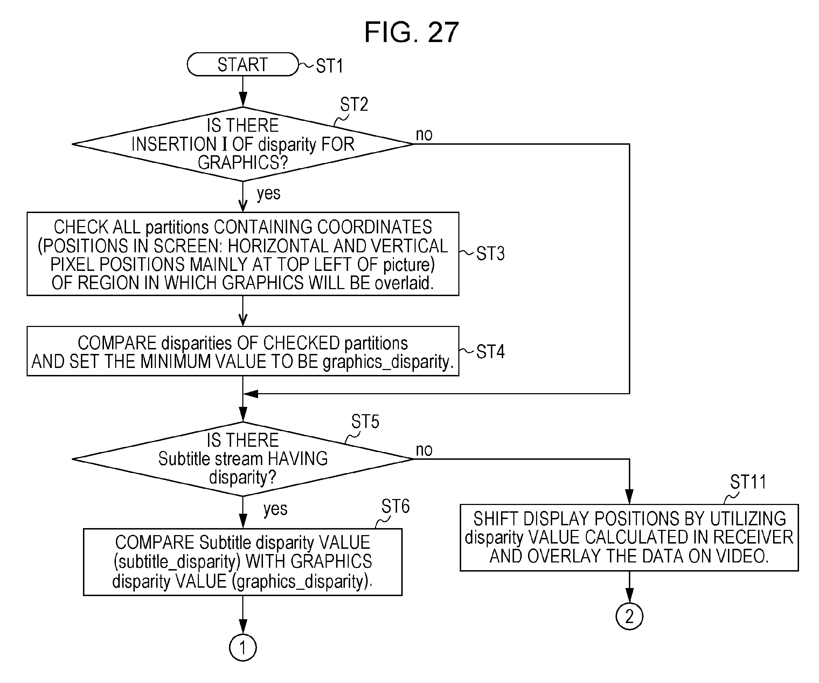

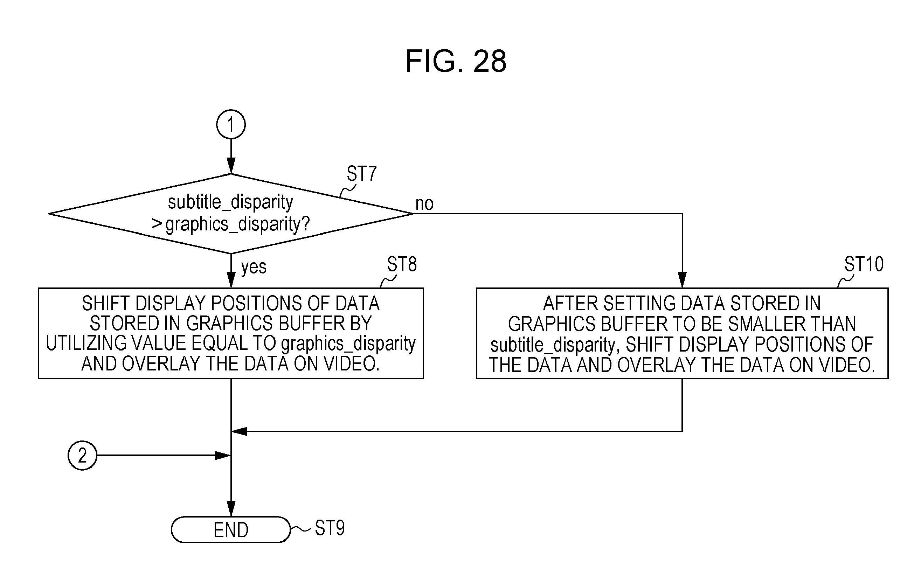

The flowcharts of Figs. 27 and 28 illustrate an example of a procedure of control processing performed by the depth control unit 220. The depth control unit 220 executes this control processing for each picture (frame) for displaying graphics. In step ST1, the depth control unit 220 starts control processing. Thereafter, in step ST2, the depth control unit 220 determines on the basis of identification information whether there is an insertion of disparity information for graphics into a video stream.

If there is an insertion of disparity information into the video stream, the depth control unit 220 proceeds to processing of step ST3. In this step ST3, the depth control unit 220 checks all partitioned regions (partitions) containing coordinates at which graphics will be overlaid and displayed. Then, in step ST4, the depth control unit 220 compares items of disparity information concerning the checked partitioned regions with each other, selects a suitable value, for example, the minimum value, and then sets the selected value to be the value (graphics_disparity) of graphics disparity information (disparity).

Then, the depth control unit 220 proceeds to processing of step ST5. If it is found in the above-described step ST2 that there is no insertion of disparity information into the video stream, the depth control unit 220 directly proceeds to processing of step ST5. In this step ST5, the depth control unit 220 determines whether or not there is a subtitle stream (Subtitle stream) having disparity information (disparity).

If there is a subtitle stream (Subtitle stream) having disparity information (disparity), in step ST6, the depth control unit 220 compares the value (subtitle_disparity) of subtitle disparity information (disparity) with the value (graphics_disparity) of graphics disparity information. Note that, if there is no insertion of graphics disparity information (disparity) into the video stream, the value (graphics_disparity) of the graphics disparity information is set to be, for example, "0".

Then, in step ST7, the depth control unit 220 determines whether or not the condition of "subtitle_disparity > (graphics_disparity) is satisfied. If this condition is satisfied, in step ST8, the depth control unit 220 obtains graphics bitmap data for left-eye display and graphics bitmap data for right-eye display generated by shifting the display positions of the graphics bitmap data "Graphics data" stored in the graphics buffer 221 by utilizing a value equal to the value of the graphics disparity information (disparity), and overlays the graphics bitmap data for left-eye display and the graphics bitmap data for right-eye display on the left-eye image data and the right-eye image data, respectively. After processing of step ST8, the depth control unit 220 completes the control processing in step ST9.

On the other hand, if it is found in step ST7 that the condition is not satisfied, in step ST10, the depth control unit 220 obtains graphics bitmap data for left-eye display and graphics bitmap data for right-eye display generated by shifting the display positions of the graphics bitmap data "Graphics data" stored in the graphics buffer 221 by utilizing a value smaller than the value of the subtitle disparity information (disparity), and overlays the graphics bitmap data for left-eye display and the graphics bitmap data for right-eye display on the left-eye image data and the right-eye image data, respectively. After processing of step ST10, the depth control unit 220 completes the control processing in step ST9.

Moreover, if it is found in step ST5 that there is no subtitle stream (Subtitle stream) having disparity information (disparity), in step ST11, the depth control unit 220 obtains graphics bitmap data for left-eye display and graphics bitmap data for right-eye display generated by shifting the display positions of the graphics bitmap data "Graphics data" stored in the graphics buffer 221 by utilizing a value of disparity information (disparity) calculated in the television receiver 200, and overlays the graphics bitmap data for left-eye display and the graphics bitmap data for right-eye display on the left-eye image data and the right-eye image data, respectively. After processing of step ST11, the depth control unit 220 completes the control processing in step ST9.

The coded buffer 241 temporarily stores therein an audio stream extracted by the demultiplexer 212. The audio decoder 242 performs processing reverse to the processing performed by the above-described audio encoder 119 of the transmission data generating unit 110 (see Fig. 8). That is, the audio decoder 242 performs decoding processing on the audio stream stored in the coded buffer 241, thereby obtaining decoded sound data. The audio buffer 243 temporarily stores therein sound data obtained by the audio decoder 242. For the sound data stored in the audio buffer 243, the channel mixing unit 244 generates sound data of each channel for implementing, for example, 5.1 ch surrounding, or the like, and outputs the generated sound data.

Note that the reading of information (data) from the decoded buffer 215, the disparity information buffer 218, the pixel buffer 233, the subtitle disparity information buffer 234, and the audio buffer 243 is performed on the basis of PTS, thereby providing transfer synchronization.

The operation of the television reception 200 shown in Fig. 25 will be briefly discussed. A transport stream TS received by a digital tuner or the like is temporarily stored in the container buffer 211. In this transport stream TS, a video stream, a subtitle stream, and an audio stream are contained. As the video stream, one or two video streams obtained by encoding left-eye image data and right-eye image data are contained.

In the demultiplexer 212, individual streams, that is, video, subtitle, and audio streams, are extracted from the transport stream TS temporarily stored in the container buffer 211. Moreover, in the demultiplexer 212, from this transport stream TS, identification information (flag information of "graphics_depth_info_not_existed_flag") indicating whether or not disparity information is inserted in a video stream is extracted, and is transmitted to a control unit (CPU), which is not shown.

The video stream extracted by the demultiplexer 212 is supplied to the coded buffer 213 and is temporarily stored therein. Then, in the video decoder 214, decoding processing is performed on the video stream stored in the coded buffer 213 so as to obtain left-eye image data and right-eye image data. These left-eye image data and right-eye image data are temporarily stored in the decoded buffer 215. Moreover, in the video decoder 214, disparity information for each picture of image data inserted in the video stream is obtained. This disparity information is temporarily stored in the disparity information buffer 218.

In the scaler 216, scaling processing is performed, according to the necessity, on the left-eye image data and the right-eye image data output from the decoded buffer 215 in the horizontal direction or in the vertical direction. From this scaler 216, for example, left-eye image data and right-eye image data having a 1920*1080 full HD size, are obtained. These left-eye image data and right-eye image data are supplied to the overlay unit 217.

Moreover, the subtitle stream extracted by the demultiplexer 212 is supplied to the coded buffer 231 and is temporarily stored therein. In the subtitle decoder 232, decoding processing is performed on the subtitle stream stored in the coded buffer 231 so as to obtain subtitle data. In this subtitle data, bitmap data indicating a subtitle, display position information "Subtitle rendering position (x2, y2)" concerning this subtitle, and disparity information "Subtitle disparity" concerning the subtitle are contained.

The bitmap data indicating the subtitle and the display position information "Subtitle rendering position (x2, y2)" concerning the subtitle obtained by the subtitle decoder 232 are temporarily stored in the pixel buffer 233. Moreover, disparity information "Subtitle disparity" concerning the subtitle obtained by the subtitle decoder 232 is temporarily stored in the subtitle disparity information buffer 234.

In the subtitle display control unit 235, on the basis of the bitmap data indicating the subtitle, and the display position information and the disparity information concerning this subtitle, bitmap data "Subtitle data" indicating a subtitle for left-eye display appended with disparity and bitmap data "Subtitle data" indicating a subtitle for right-eye display appended with disparity are generated. The bitmap data "Subtitle data" indicating the subtitle for left-eye display and the bitmap data "Subtitle data" indicating the subtitle for right-eye display generated in this manner are supplied to the overlay unit 217, and are overlaid on the left-eye image data and the right-eye image data, respectively.

In the television (TV)) graphics generating unit 219, graphics data, such as OSD graphics data, application graphics data, EPG graphics data, or the like, is generated. In this graphics data, graphics bitmap data "Graphics data" and display position information "Graphicsrendering position (x1, y1)" concerning this graphics are contained. In the graphics buffer 221, graphics data generated by the television graphics generating unit 219 is temporarily stored.

In the overlay unit 217, the graphics bitmap data "Graphics data" stored in the graphics buffer 221 is overlaid on the left-eye image data and the right-eye image data. In this case, on the basis of disparity information corresponding to the graphics display position, disparity is appended to the graphics bitmap data "Graphics data" to be overlaid on each of the left-eye image data and the right-eye image data by the depth control unit 220. In this case, if the graphics bitmap data "Graphics data" has the same pixels as those of the subtitle bitmap data "Subtitledata", the subtitle data is overwritten with the graphics data by the overlay unit 217.

From the overlay unit 217, left-eye image data on which the subtitle and the graphics for left-eye display are overlaid is obtained, and also, right-eye image data on which the subtitle and the graphics for right-eye display are overlaid is obtained. These items of image data are transmitted to a processing unit for displaying a three-dimensional image, and then, a three-dimensional image is displayed.

The audio stream extracted by the demultiplexer 212 is supplied to the coded buffer 241 and is temporarily stored therein. In the audio decoder 242, decoding processing is performed on the audio stream stored in the coded buffer 241 so as to obtain decoded sound data. This sound data is supplied to the channel mixing unit 244 through the audio buffer 243. In the channel mixing unit 244, for the sound data, sound data of each channel for implementing, for example, 5.1 ch surrounding, or the like, is generated. This sound data is supplied to, for example, a speaker, and sound is output in accordance with display of a three-dimensional image.

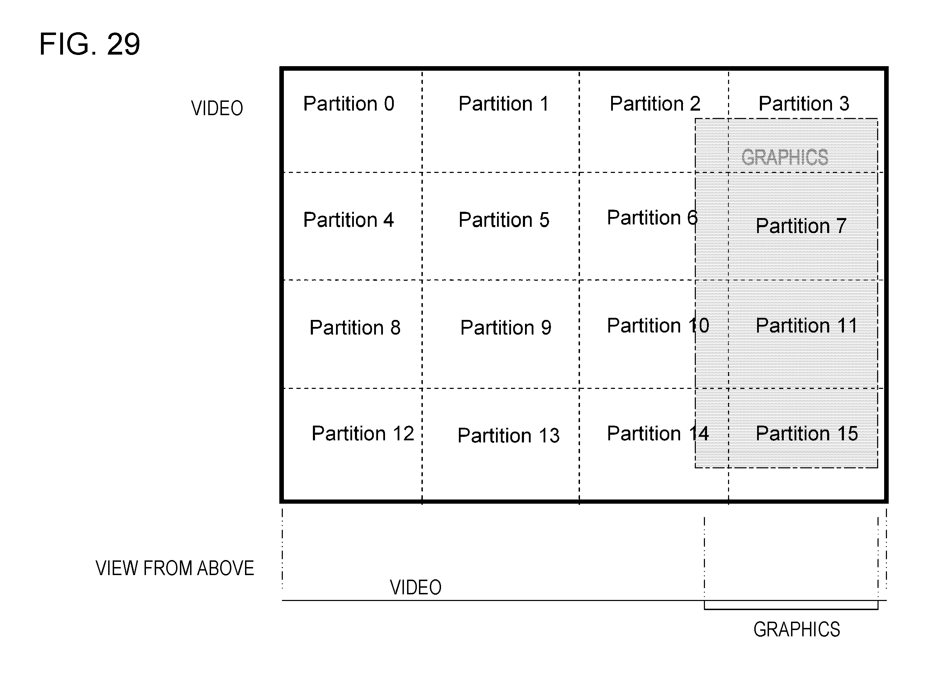

Fig. 29 illustrates an example of depth control of graphics in the television receiver 200. In this example, in the graphics, on the basis of an item of disparity information indicating the minimum value among items of disparity information in eight partitioned regions (Partitions 2, 3, 6, 7, 10, 11, 14, 15) on the right side, disparity is appended to each of the graphics for left-eye display and the graphics for right-eye display. As a result, the graphics is displayed in front of image (video) objects in these eight partitioned regions.

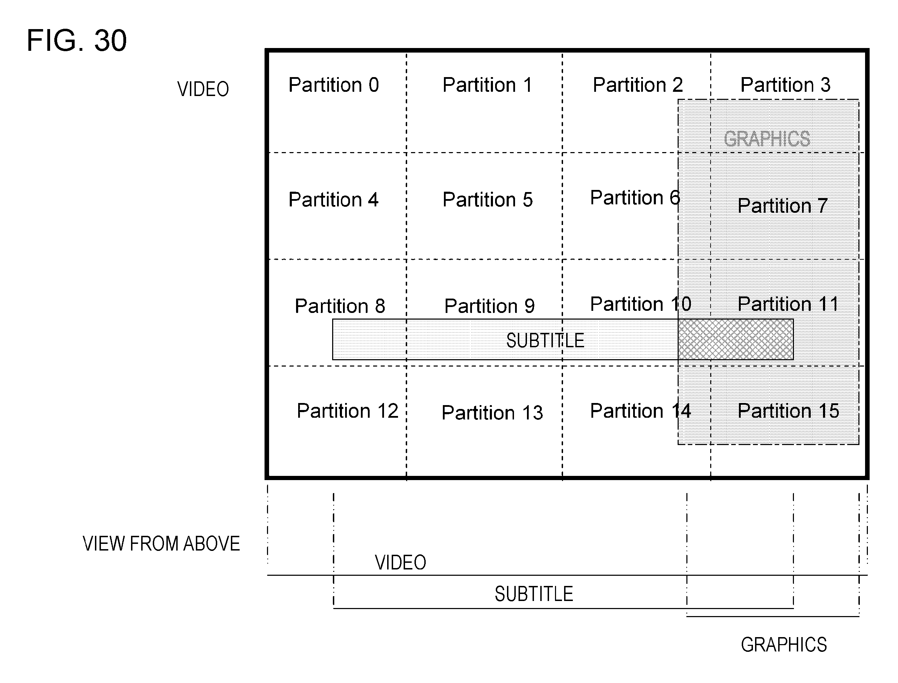

Fig. 30 also illustrates an example of depth control of graphics in the television receiver 200. In this example, in the graphics, on the basis of an item of disparity information indicating the minimum value among items of disparity information in eight partitioned regions (Partitions 2, 3, 6, 7, 10, 11, 14, 15) on the right side and also on the basis of disparity information concerning a subtitle, disparity is appended to each of the graphics for left-eye display and the graphics for right-eye display. As a result, the graphics is displayed in front of image (video) objects in these eight partitioned regions, and is also displayed in front of the subtitle. Note that, in this case, on the basis of the disparity information concerning the subtitle, the subtitle is also displayed in front of image (video) objects in four partitioned regions (Partitions 8, 9, 10, 11) corresponding to the display position of the subtitle.

As described above, in the image transmitting/receiving system 10 shown in Fig. 1, disparity information obtained for each picture of image data is inserted into a video stream, and then, the video stream is transmitted. Thus, depth control of graphics to be overlaid and displayed on a three-dimensional image in a receiving side can be sufficiently performed with the picture (frame) precision.

Moreover, in the image transmitting/receiving system 10 shown in Fig. 1, identification information indicating whether or not there is an insertion of disparity information into a video stream is inserted into a layer of a transport stream TS. Accordingly, due to this identification information, a receiving side is able to easily identify whether or not there is an insertion of disparity information into a video stream and to appropriately perform depth control of graphics.

Moreover, in the image transmitting/receiving system 10 shown in Fig. 1, disparity information for each picture to be inserted into a video stream is constituted by partition information concerning a picture display screen and disparity information concerning each partitioned region. Accordingly, depth control of graphics to be overlaid and displayed on a three-dimensional image in a receiving side can be sufficiently performed in accordance with the display position of the graphics.

<2. Modified Example>

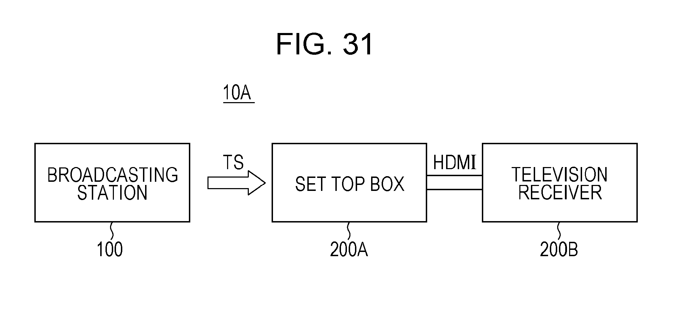

Note that although, in the above-described embodiment, the image transmitting/receiving system 10 including the broadcasting station 100 and the receiver 200 is indicated, the configuration of an image transmitting/receiving system to which the present technology is applicable is not restricted to this. For example, as shown in Fig. 31, the television receiver 200 may be constituted by a set top box 200A and a television receiver 200B connected to each other via a digital interface, such as (HDMI (High-Definition Multimedia Interface).

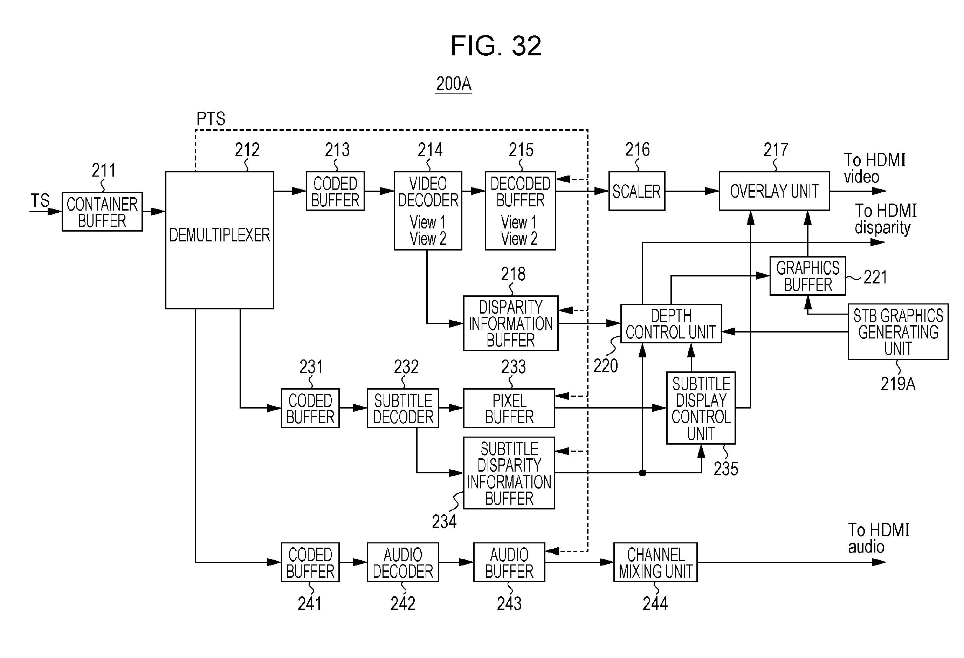

Fig. 32 illustrates an example of the configuration of the set top box 200A. In Fig. 32, elements corresponding to those shown in Fig. 25 are designated by like reference numerals, and a detailed explanation thereof will be omitted as appropriate. A set top box (STB) graphics generating unit 219A generates graphics data, such as OSD graphics data, application graphics data, EPG graphics data, or the like. In this graphics data, graphics bitmap data "Graphics data" and display position information "Graphicsrendering position (x1, y1)" concerning this graphics are contained. In the graphics buffer 221, graphics bitmap data generated by the set top box graphics generating unit 219A is temporarily stored.

In the overlay unit 217, bitmap data "Subtitle data" indicating a subtitle for left-eye display and bitmap data "Subtitle data" concerning a subtitle for right-eye display generated by the subtitle display control unit 235 are overlaid on left-eye image data and right-eye image data, respectively. Moreover, in this overlay unit 217, the graphics bitmap data "Graphics data" stored in the graphics buffer 221 is overlaid on the left-eye image data and the right-eye image data. In this case, disparity is appended, by the depth control unit 220, to the graphics bitmap data "Graphics data" to be overlaid on each of the left-eye image data and the right-eye image data, on the basis of disparity information corresponding to the display position of graphics.

From the overlay unit 217, left-eye image data on which the subtitle and the graphics for left-eye display are overlaid is obtained, and also, right-eye image data on which the subtitle and the graphics for right-eye display are overlaid is obtained. These items of image data are transmitted to an HDMI transmitting unit. Sound data of each channel obtained by the channel mixing unit 244 is also transmitted to the HDMI transmitting unit.

Moreover, disparity information (Disparity), stored in the disparity information buffer 218, concerning each of partitioned regions (Partitions) of each picture of image data is transmitted to the HDMI transmitting unit through the use of the depth control unit 220. In this case, disparity information (Disparity) concerning each partitioned region (Partition) corresponding to the display position of the subtitle and the display position of the graphics is updated by disparity information (Disparity) used for appending disparity to the subtitle or the graphics.

For example, in the case of the above-described example of depth control shown in Fig. 30, first of all, the values of the items of disparity information (Disparity) in the four partitioned regions (Partitions 8, 9, 10, 11) corresponding to the display position of the subtitle are updated by disparity information values (subtitle_disparity) used for appending disparity to the subtitle. Thereafter, the values of the items of disparity information (Disparity) in the eight partitioned regions (Partitions 2, 3, 6, 7, 10, 11, 14, 15) are updated by disparity information values (graphics_disparity) used for appending disparity to the graphics.

Although a detailed explanation will be omitted, the other elements in the set top box 200A shown in Fig. 32 are configured similarly to those of the television receiver 200 shown in Fig. 25.

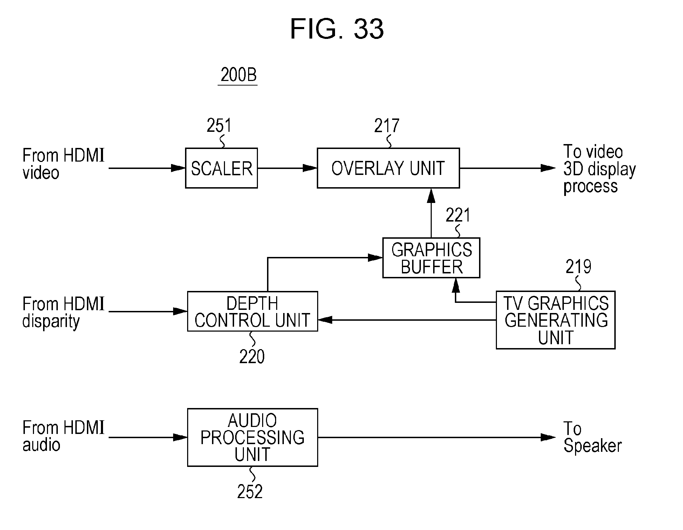

Fig. 33 illustrates an example of the configuration of an HDMI input system of the television receiver 200B. In Fig. 33, elements corresponding to those shown in Fig. 25 are designated by like reference numerals, and a detailed explanation thereof will be omitted as appropriate. Left-eye image data and right-eye image data received by an HDMI receiving unit are subjected to scaling processing by using a scaler 251 according to the necessity, and are then supplied to the overlay unit 217.

Moreover, disparity information (Disparity) concerning each of partitioned regions of each picture of image data received by the HDMI receiving unit is supplied to the depth control unit 220. Moreover, in the television (TV)) graphics generating unit 219, graphics data, such as OSD graphics data, application graphics data, or the like, is generated. In this graphics data, graphics bitmap data "Graphics data" and display position information "Graphicsrendering position (x1, y1)" concerning this graphics are contained. In the graphics buffer 221, graphics data generated by the television graphics generating unit 219 is temporarily stored. Moreover, the display position information "Graphics rendering position (x1, y1)" concerning this graphics is supplied to the depth control unit 220.

In the overlay unit 217, the graphics bitmap data "Graphics data" stored in the graphics buffer 221 is overlaid on the left-eye image data and the right-eye image data. In this case, on the basis of disparity information corresponding to the graphics display position, disparity is appended to the graphics bitmap data "Graphics data" to be overlaid on each of the left-eye image data and the right-eye image data by the depth control unit 220. In the overlay unit 217, left-eye image data on which the graphics for left-eye display is overlaid is obtained, and also, right-eye image data on which the graphics for right-eye display is overlaid is obtained. These items of image data are transmitted to a processing unit for displaying a three-dimensional image, and then, a three-dimensional image is displayed.

Moreover, sound data of each channel received by the HDMI receiving unit is supplied to a speaker through an audio processing unit 252 for adjusting the sound quality and the sound volume, and sound is output in accordance with display of a three-dimensional image.

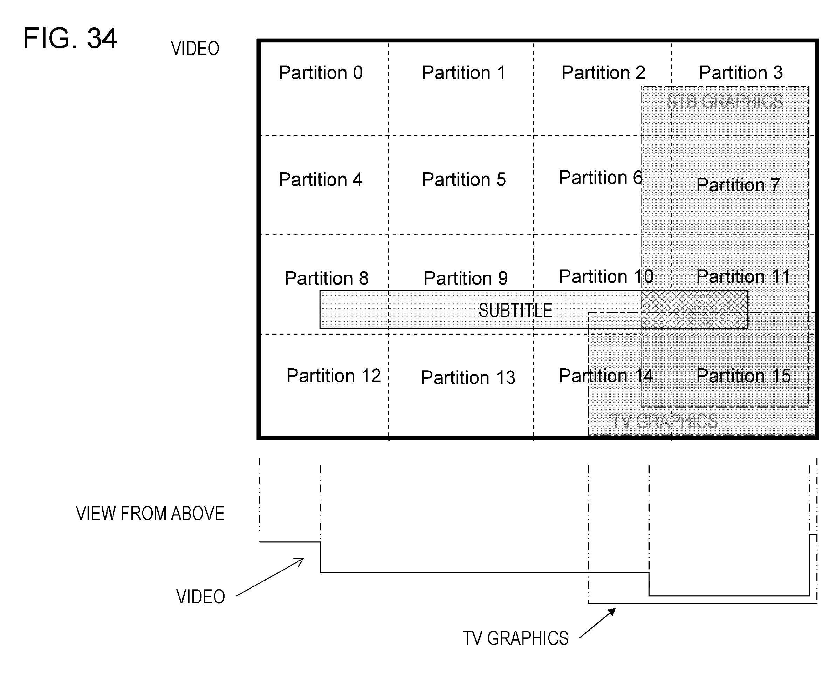

Fig. 34 illustrates an example of depth control of graphics in the television receiver 200B. In this example, concerning TV graphics, on the basis of an item of disparity information indicating the minimum value among items of disparity information in four partitioned regions (Partitions 10, 11, 14, 15) on the right side, disparity is appended to each of graphics for left-eye display and graphics for right-eye display. As a result, the TV graphics is displayed in front of image (video) objects in these four partitioned regions. Note that, in this case, a subtitle and STB graphics are already overlaid on an image (video).

Moreover, in the above-described embodiment, an example in which a container is a transport stream (MPEG-2 TS) is indicated. However, the present technology is applicable in a similar manner to a system having a configuration in which distribution to a receiving terminal is performed by utilizing a network, such as the Internet. In the Internet distribution, in most cases, distribution is performed through MP4 or another format of a container. That is, as the container, various formats of containers, such as a transport stream (MPEG-2 TS) defined in the digital broadcasting standards, MP4 used in the Internet distribution, and so on, are applicable.

Moreover, the present technology may be implemented by the following configurations.

(1) A transmitting apparatus including:

an image data obtaining unit that obtains left-eye image data and right-eye image data which form a three-dimensional image;
a disparity information obtaining unit that obtains, for each of pictures of the obtained image data, disparity information concerning the left-eye image data with respect to the right-eye image data and concerning the right-eye image data with respect to the left-eye image data;
a disparity information inserting unit that inserts the obtained disparity information into a video stream which is obtained by encoding the obtained image data;
an image data transmitting unit that transmits a container of a predetermined format which contains the video stream into which the disparity information is inserted; and
an identification information inserting unit that inserts, into a layer of the container, identification information for identifying whether or not there is an insertion of the disparity information into the video stream.

(2) The transmitting apparatus according to (1), wherein the disparity information inserting unit inserts the disparity information into the video stream in units of pictures or in units of GOPs.
(3) The transmitting apparatus according to (1) or (2), wherein the disparity information obtaining unit obtains, for each of the pictures, disparity information concerning each of partitioned regions on the basis of partition information concerning a picture display screen.
(4) The transmitting apparatus according to (3), wherein the disparity information obtaining unit partitions the picture display screen such that a partitioned region does not cross an encoding block boundary, on the basis of the partition information concerning the picture display screen, and obtains, for each of the pictures, disparity information concerning each of the partitioned regions.
(5) The transmitting apparatus according to (3) or (4), wherein the disparity information for each of the pictures, which is inserted into the video stream by the disparity information inserting unit, includes the partition information concerning the picture display screen and the disparity information concerning each of the partitioned regions.
(6) The transmitting apparatus according to any one of (1) through (5), wherein the image data transmitting unit transmits the container by including, in the container, a subtitle stream which is obtained by encoding subtitle data having the disparity information corresponding to a display position.
(7) The transmitting apparatus according to any one of (1) through (6), wherein:

the container is a transport stream; and
the identification information inserting unit inserts the identification information under a program map table or an event information table.

(8) The transmitting apparatus according to (7), wherein the identification information inserting unit describes the identification information in a descriptor inserted under the program map table or the event information table.
(9) A transmitting method including:

a step of obtaining left-eye image data and right-eye image data which form a three-dimensional image;
a step of obtaining, for each of pictures of the obtained image data, disparity information concerning the left-eye image data with respect to the right-eye image data and concerning the right-eye image data with respect to the left-eye image data;
a step of inserting the obtained disparity information into a video stream which is obtained by encoding the obtained image data;
a step of transmitting a container of a predetermined format which contains the video stream into which the disparity information is inserted; and
a step of inserting, into a layer of the container, identification information for identifying whether or not there is an insertion of the disparity information into the video stream.

(10) A transmitting apparatus including:

an image data obtaining unit that obtains left-eye image data and right-eye image data which form a three-dimensional image;

a disparity information obtaining unit that obtains, for each of pictures of the obtained image data, disparity information concerning the left-eye image data with respect to the right-eye image data and concerning the right-eye image data with respect to the left-eye image data;

a disparity information inserting unit that inserts the obtained disparity information into a video stream which is obtained by encoding the obtained image data; and

an image data transmitting unit that transmits a container of a predetermined format which contains the video stream into which the disparity information is inserted, wherein

the disparity information obtaining unit obtains, for each of the pictures, the disparity information concerning each of partitioned regions on the basis of partition information concerning a picture display screen, and

the disparity information for each of the pictures, which is inserted into the video stream by the disparity information inserting unit, includes the partition information concerning the picture display screen and the disparity information concerning each of the partitioned regions.

(11) The transmitting apparatus according to (10), wherein the disparity information inserting unit inserts the disparity information into the video stream in units of pictures or in units of GOPs.

(12) The transmitting apparatus according to (10) or (11),
wherein the disparity information obtaining unit partitions the picture display screen such that a partitioned region does not cross an encoding block boundary, on the basis of the partition information concerning the picture display screen, and obtains, for each of the pictures, disparity information concerning each of partitioned regions.

(13) A transmitting method including:

an image data obtaining step of obtaining left-eye image data and right-eye image data which form a three-dimensional image;

a disparity information obtaining step of obtaining, for each of pictures of the obtained image data, disparity information concerning the left-eye image data with respect to the right-eye image data and concerning the right-eye image data with respect to the left-eye image data;

a disparity information inserting step of inserting the obtained disparity information into a video stream which is obtained by encoding the obtained image data; and

an image data transmitting step of transmitting a container of a predetermined format which contains the video stream into which the disparity information is inserted, wherein

in the disparity information obtaining step, for each of the pictures, the disparity information concerning each of partitioned regions is obtained on the basis of partition information concerning a picture display screen, and

in the disparity information inserting step, the disparity information for each of the pictures, which is inserted into the video stream, includes the partition information concerning the picture display screen and the disparity information concerning each of the partitioned regions.

(14) A receiving apparatus including:

an image data receiving unit that receives a container of a predetermined format which contains a video stream, the video stream being obtained by encoding left-eye image data and right-eye image data which form a three-dimensional image, disparity information concerning the left-eye image data with respect to the right-eye image data and concerning the right-eye image data with respect to the left-eye image data being inserted into the video stream, the disparity information being obtained, for each of pictures of the image data, in accordance with each of a predetermined number of partitioned regions of a picture display screen;

an information obtaining unit that obtains, from the video stream contained in the container, the left-eye image data and the right-eye image data and also obtains the disparity information concerning each of the partitioned regions of each of the pictures of the image data;

a graphics data generating unit that generates graphics data for displaying graphics on an image; and

an image data processing unit that appends, for each of the pictures, by using the obtained image data, the obtained disparity information, and the generated graphics data, disparity corresponding to a display position of the graphics to be overlaid on a left-eye image and a right-eye image to the graphics, thereby obtaining data indicating a left-eye image on which the graphics is overlaid and data indicating a right-eye image on which the graphics is overlaid.

(15) The receiving apparatus according to (14), wherein:

identification information for identifying whether or not there is an insertion of the disparity information into the video stream is inserted into a layer of the container;
the receiving apparatus further includes an identification information obtaining unit that obtains the identification information from the container; and
when the obtained identification information indicates that there is an insertion of the disparity information, the information obtaining unit obtains the disparity information from the video stream contained in the container.

(16) The receiving apparatus according to (15), wherein, when the obtained identification information indicates that there is no insertion of the disparity information, the image data processing unit utilizes disparity information calculated in the apparatus.

(17) The receiving apparatus according to any one of (14) through (16), wherein, when a subtitle is displayed together with display of the graphics, the image data processing unit appends disparity to the graphics so that the graphics will be displayed in front of the subtitle.

(18) The receiving apparatus according to any one of (14) through (17), wherein the image data processing unit appends disparity to the graphics by utilizing an item of disparity information selected from among items of disparity information of a predetermined number of partitioned regions corresponding to a display position of the graphics.

(19) The receiving apparatus according to any one of (14) through (18), further including:

a disparity information updating unit that updates the disparity information, which is obtained by the information obtaining unit, concerning each of the partitioned regions of each of the pictures of the image data in accordance with overlaying of the graphics on an image; and
a disparity information transmitting unit that transmits the updated disparity information to an external device to which the image data obtained by the image data processing unit is transmitted.

(20) A receiving method including:

an image data receiving step of receiving a container of a predetermined format which contains a video stream, the video stream being obtained by encoding left-eye image data and right-eye image data which form a three-dimensional image, disparity information concerning the left-eye image data with respect to the right-eye image data and concerning the right-eye image data with respect to the left-eye image data being inserted into the video stream, the disparity information being obtained, for each of pictures of the image data, in accordance with each of a predetermined number of partitioned regions of a picture display screen;
an information obtaining step of obtaining, from the video stream contained in the container, the left-eye image data and the right-eye image data and also obtaining the disparity information concerning each of the partitioned regions of each of the pictures of the image data;
a graphics data generating step of generating graphics data for displaying graphics on an image; and
an image data processing step of appending, for each of the pictures, by using the obtained image data, the obtained disparity information, and the generated graphics data, disparity corresponding to a display position of the graphics to be overlaid on a left-eye image data and a right-eye image data to the graphics, thereby obtaining data indicating a left-eye image on which the graphics is overlaid and data indicating a right-eye image on which the graphics is overlaid.

Major features of the present technology are as follows. Disparity information obtained for each picture of image data is inserted into a video stream, and then, the video stream is transmitted. Identification information indicating whether or not there is an insertion of disparity information into a video stream is inserted into a layer of a transport stream (container) containing this video stream. Thus, a receiving side is able to easily identify whether or not there is an insertion of disparity information into a video stream and to appropriately perform depth control of graphics (see Fig. 6). Moreover, the disparity information for each of the pictures, which is inserted into the video stream, includes partition information concerning a picture display screen and disparity information concerning each of partitioned regions. Thus, depth control of graphics to be overlaid and displayed on a three-dimensional image in a receiving side can be sufficiently performed in accordance with the display position of the graphics (see Figs. 15 and 18).

Reference Signs List

1

10, 10A image transmitting/receiving system
100A broadcasting station
111L, 111R image data output unit
112L, 112 scaler
113 video encoder
114 multiplexer
115 disparity data generating unit
116 subtitle data output unit
117 subtitle encoder
118 sound data output unit
119 audio encoder
200, 200B television receiver
200 set top box
211 container buffer
212 demultiplexer
213 coded buffer
214 video decoder
215 decoded buffer
216 scaler
217 overlay unit
218 disparity information buffer
219 television (TV) graphics generating unit
219A set top box (STB) graphics generating unit
220 depth control unit
221 graphics buffer
231 coded buffer
232 subtitle decoder
233 pixel buffer
234 subtitle disparity information buffer
235 subtitle display control unit
241 coded buffer
242 audio decoder
243 audio buffer
244 channel mixing unit
251 scaler
252 audio processing unit

**Claims**

1.   A transmitting apparatus comprising:

an image data obtaining unit that obtains left-eye image data and right-eye image data which form a three-dimensional image;
a disparity information obtaining unit that obtains, for each of pictures of the obtained image data, disparity information concerning the left-eye image data with respect to the right-eye image data and concerning the right-eye image data with respect to the left-eye image data;
a disparity information inserting unit that inserts the obtained disparity information into a video stream which is obtained by encoding the obtained image data;
an image data transmitting unit that transmits a container of a predetermined format which contains the video stream into which the disparity information is inserted; and
an identification information inserting unit that inserts, into a layer of the container, identification information for identifying whether or not there is an insertion of the disparity information into the video stream.

2.   The transmitting apparatus according to Claim 1, wherein the disparity information inserting unit inserts the disparity information into the video stream in units of pictures or in units of GOPs.

3.   The transmitting apparatus according to Claim 1, wherein the disparity information obtaining unit obtains, for each of the pictures, disparity information concerning each of partitioned regions on the basis of partition information concerning a picture display screen.

4. The transmitting apparatus according to Claim 3, wherein the disparity information obtaining unit partitions the picture display screen such that a partitioned region does not cross an encoding block boundary, on the basis of the partition information concerning the picture display screen, and obtains, for each of the pictures, disparity information concerning each of the partitioned regions.

5. The transmitting apparatus according to Claim 3, wherein the disparity information for each of the pictures, which is inserted into the video stream by the disparity information inserting unit, includes the partition information concerning the picture display screen and the disparity information concerning each of the partitioned regions.

6. The transmitting apparatus according to Claim 1, wherein the image data transmitting unit transmits the container by including, in the container, a subtitle stream which is obtained by encoding subtitle data having the disparity information corresponding to a display position.

7. The transmitting apparatus according to Claim 1, wherein:

the container is a transport stream; and
the identification information inserting unit inserts the identification information under a program map table or an event information table.

8. The transmitting apparatus according to Claim 7, wherein the identification information inserting unit describes the identification information in a descriptor inserted under the program map table or the event information table.

9. A transmitting method comprising:

a step of obtaining left-eye image data and right-eye image data which form a three-dimensional image;
a step of obtaining, for each of pictures of the obtained image data, disparity information concerning the left-eye image data with respect to the right-eye image data and concerning the right-eye image data with respect to the left-eye image data;
a step of inserting the obtained disparity information into a video stream which is obtained by encoding the obtained image data;
a step of transmitting a container of a predetermined format which contains the video stream into which the disparity information is inserted; and
a step of inserting, into a layer of the container, identification information for identifying whether or not there is an insertion of the disparity information into the video stream.

10. A transmitting apparatus comprising:

an image data obtaining unit that obtains left-eye image data and right-eye image data which form a three-dimensional image;
a disparity information obtaining unit that obtains, for each of pictures of the obtained image data, disparity information concerning the left-eye image data with respect to the right-eye image data and concerning the right-eye image data with respect to the left-eye image data;
a disparity information inserting unit that inserts the obtained disparity information into a video stream which is obtained by encoding the obtained image data; and
an image data transmitting unit that transmits a container of a predetermined format which contains the video stream into which the disparity information is inserted, wherein
the disparity information obtaining unit obtains, for each of the pictures, the disparity information concerning each of partitioned regions on the basis of partition information concerning a picture display screen, and
the disparity information for each of the pictures, which is inserted into the video stream by the disparity information inserting unit, includes the partition information concerning the picture display screen and the disparity information concerning each of the partitioned regions.

11. The transmitting apparatus according to Claim 10, wherein the disparity information inserting unit inserts the disparity information into the video stream in units of pictures or in units of GOPs.

**12.** The transmitting apparatus according to Claim 10, wherein the disparity information obtaining unit partitions the picture display screen such that a partitioned region does not cross an encoding block boundary, on the basis of the partition information concerning the picture display screen, and obtains, for each of the pictures, disparity information concerning each of partitioned regions.

**13.** A transmitting method comprising:

an image data obtaining step of obtaining left-eye image data and right-eye image data which form a three-dimensional image;

a disparity information obtaining step of obtaining, for each of pictures of the obtained image data, disparity information concerning the left-eye image data with respect to the right-eye image data and concerning the right-eye image data with respect to the left-eye image data;

a disparity information inserting step of inserting the obtained disparity information into a video stream which is obtained by encoding the obtained image data; and

an image data transmitting step of transmitting a container of a predetermined format which contains the video stream into which the disparity information is inserted, wherein

in the disparity information obtaining step, for each of the pictures, the disparity information concerning each of partitioned regions is obtained on the basis of partition information concerning a picture display screen, and

in the disparity information inserting step, the disparity information for each of the pictures, which is inserted into the video stream, includes the partition information concerning the picture display screen and the disparity information concerning each of the partitioned regions.

**14.** A receiving apparatus comprising:

an image data receiving unit that receives a container of a predetermined format which contains a video stream, the video stream being obtained by encoding left-eye image data and right-eye image data which form a three-dimensional image, disparity information concerning the left-eye image data with respect to the right-eye image data and concerning the right-eye image data with respect to the left-eye image data being inserted into the video stream, the disparity information being obtained, for each of pictures of the image data, in accordance with each of a predetermined number of partitioned regions of a picture display screen;

an information obtaining unit that obtains, from the video stream contained in the container, the left-eye image data and the right-eye image data and also obtains the disparity information concerning each of the partitioned regions of each of the pictures of the image data;

a graphics data generating unit that generates graphics data for displaying graphics on an image; and

an image data processing unit that appends, for each of the pictures, by using the obtained image data, the obtained disparity information, and the generated graphics data, disparity corresponding to a display position of the graphics to be overlaid on a left-eye image and a right-eye image to the graphics, thereby obtaining data indicating a left-eye image on which the graphics is overlaid and data indicating a right-eye image on which the graphics is overlaid.

**15.** The receiving apparatus according to Claim 14, wherein:

identification information for identifying whether or not there is an insertion of the disparity information into the video stream is inserted into a layer of the container;

the receiving apparatus further comprises an identification information obtaining unit that obtains the identification information from the container; and

when the obtained identification information indicates that there is an insertion of the disparity information, the information obtaining unit obtains the disparity information from the video stream contained in the container.

**16.** The receiving apparatus according to Claim 15, wherein, when the obtained identification information indicates that there is no insertion of the disparity information, the image data processing unit utilizes disparity information calculated in the apparatus.

**17.** The receiving apparatus according to Claim 14, wherein, when a subtitle is displayed together with display of the graphics, the image data processing unit appends disparity to the graphics so that the graphics will be displayed in front of the subtitle.

**18.** The receiving apparatus according to Claim 14, wherein the image data processing unit appends disparity to the graphics by utilizing an item of disparity information selected from among items of disparity information of a predetermined number of partitioned regions corresponding to a display position of the graphics.

**19.** The receiving apparatus according to Claim 14, further comprising:

a disparity information updating unit that updates the disparity information, which is obtained by the information obtaining unit, concerning each of the partitioned regions of each of the pictures of the image data in accordance with overlaying of the graphics on an image; and
a disparity information transmitting unit that transmits the updated disparity information to an external device to which the image data obtained by the image data processing unit is transmitted.

**20.** A receiving method comprising:

an image data receiving step of receiving a container of a predetermined format which contains a video stream, the video stream being obtained by encoding left-eye image data and right-eye image data which form a three-dimensional image, disparity information concerning the left-eye image data with respect to the right-eye image data and concerning the right-eye image data with respect to the left-eye image data being inserted into the video stream, the disparity information being obtained, for each of pictures of the image data, in accordance with each of a predetermined number of partitioned regions of a picture display screen;
an information obtaining step of obtaining, from the video stream contained in the container, the left-eye image data and the right-eye image data and also obtaining the disparity information concerning each of the partitioned regions of each of the pictures of the image data;
a graphics data generating step of generating graphics data for displaying graphics on an image; and
an image data processing step of appending, for each of the pictures, by using the obtained image data, the obtained disparity information, and the generated graphics data, disparity corresponding to a display position of the graphics to be overlaid on a left-eye image data and a right-eye image data to the graphics, thereby obtaining data indicating a left-eye image on which the graphics is overlaid and data indicating a right-eye image on which the graphics is overlaid.

# FIG. 1

10

BROADCASTING STATION ⟹ TS ⟹ TELEVISION RECEIVER

100                    200

# FIG. 2

DISPARITY INFORMATION (EACH BLOCK)

BLOCK

H

V

DP(m,n)

# FIG. 3

Disparity N-th Block  DPn

$$DPn = \min\left(\sum abs(differ(Dj - Di))\right)$$

BLOCK

Left- Viewdata picture

Right-Viewdata picture

EP 2 672 713 A1

# FIG. 4

DOWNSIZING PROCESSING

(a)

Block

(b)

Group of Block

Block

(c)

Group of Block

Partition

(d)

Picture

Partition

EP 2 672 713 A1

# FIG. 5

DETAILED EXAMPLE OF PARTITIONING OF PICTURE DISPLAY SCREEN

1 picture

# FIG. 6

Disparity data
To each partition
PO TO P15
(DO TO D15)

Frame

partition0

D0

partition1

partition2

Display
screen

partition3

D3

D9

partition9

D15

partition15

Service, or program sequence

Time

EP 2 672 713 A1

# FIG. 7

SYNCHRONIZING WITH PICTURE CODING

(a)

IMAGE DATA

DISPARITY
INFORMATION

TIME

SYNCHRONIZING WITH I PICTURE OF CODING VIDEO OR GOP

(b)

IMAGE DATA

DISPARITY
INFORMATION

TIME

SYNCHRONIZING WITH VIDEO SCENE

(c)

IMAGE DATA

Scene0    Scene1

DISPARITY
INFORMATION

TIME

EP 2 672 713 A1

## FIG. 8

EP 2 672 713 A1

# FIG. 9

EP 2 672 713 A1

# FIG. 10

## AVC video descriptor

EP 2 672 713 A1

(a)

| Syntax | No. of bits | Mnemonic |
|---|---|---|
| AVC_video_descriptor() { | | |
|     descriptor_tag | 8 | uimsbf |
|     descriptor_length | 8 | uimsbf |
|     profile_idc | 8 | uimsbf |
|     constraint_set0_flag | 1 | bslbf |
|     constraint_set1_flag | 1 | bslbf |
|     constraint_set2_flag | 1 | bslbf |
|     constraint_set3_flag | 1 | bslbf |
|     constraint_set4_flag | 1 | bslbf |
|     constraint_set5_flag | 1 | bslbf |
|     AVC_compatible_flags | 2 | bslbf |
|     level_idc | 8 | uimsbf |
|     AVC_still_present | 1 | bslbf |
|     AVC_24_hour_picture_flag | 1 | bslbf |
|     Frame_Packing_SEI_not_present_flag | 1 | bslbf |
|     graphics_depth_info_not_existed_flag | 1 | bslbf |
|     reserved | 4 | bslbf |
| } | | |

Semantics

(b)

| graphics_depth_info_not_existed_flag (1) |
|---|
|     Indicating if graphics_depth information is existed in video stream. |
|   '0'      graphics_depth information is encoded in the corresponding video stream. |
|   '1'      graphics_depth information is not encoded in the corresponding video stream. |

## FIG. 11
### MVC extension descriptor

| Syntax | No. Of bits | Mnemonic |
|---|---|---|
| MVC_extension_descriptor() { | | |
| descriptor_tag | 8 | uimsbf |
| descriptor_length | 8 | uimsbf |
| average_bit_rate | 16 | uimsbf |
| maximum_bitrate | 16 | uimsbf |
| reserved | 4 | bslbf |
| view order index_start | 10 | bslbf |
| view order index_end | 10 | bslbf |
| temporal_id_start | 3 | bslbf |
| temporal_id_end | 3 | bslbf |
| no_sei_nal_unit_present | 1 | bslbf |
| graphics_depth_info_not_existed_flag | 1 | bslbf |
| } | | |

(a)

Semantics

graphics_depth_info_not_existed_flag (1)
Indicating if graphics_depth information is existed in video stream.
'0'  graphics_depth information is encoded in the corresponding video stream.
'1'  graphics_depth information is not encoded in the corresponding video stream.

(b)

# FIG. 12

## graphics_depth_info descriptor

(a)

| Syntax | No. of Bits | Format |
|---|---|---|
| graphics_depth_info descriptor() { | | |
| descriptor_tag | 8 | uimslbf |
| descriptor_length | 8 | uimslbf |
| graphics_depth_info_not_existed_flag | 1 | bslbf |
| reserved | 7 | '0x7f' |
| } | | |

(b)

graphics_depth_info_not_existed_flag (1)
      Indicating if graphics_depth information is existed in video stream.
    '0'      graphics_depth information is encoded in the corresponding video stream.
    '1'      graphics_depth information is not encoded in the corresponding video stream.

EP 2 672 713 A1

# FIG. 13

DATA STRUCTURE OF ACCESS UNIT

ACCESS UNIT WHICH IS POSITIONED AT THE HEAD OF GOP

| AU Delimiter (ONE) | SPS (ONE) | PPS (ONE) | SEIs | Slices (Primary Coded Picture) (ONE OR MORE) | Filler data (ONE) | End of sequence (ONE) |
|---|---|---|---|---|---|---|

(a)

| Buffering period SEI message (ONE) | Recovery point SEI message (ESSENTIAL ONLY IN THE CASE OF open GOP, ONE) | Picture timing SEI message (ONE) | Pan-scan rectangle SEI message (ONE) | Decoded reference Picture marking SEI message (ONE) | depth_information _for_ graphics SEI message (ONE) |
|---|---|---|---|---|---|

ACCESS UNIT WHICH IS NOT POSITIONED AT THE HEAD OF GOP

| AU Delimiter (ONE) | PPS (ONE) | SEIs | Slices (Primary Coded Picture) (ONE OR MORE) | Filler data (ONE) | End of sequence (ONE) |
|---|---|---|---|---|---|

(b)

| Picture timing SEI message (ONE) | Pan-scan rectangle SEI message (ONE) | Decoded reference Picture marking SEI message (ONE) | depth_information _for_ graphics SEI message (ONE) |
|---|---|---|---|

□ :ESSENTIAL

⌐ ¬ :NOT ESSENTIAL

EP 2 672 713 A1

# FIG. 14

(a)

| Syntax | No. of Bits | Format |
|---|---|---|
| user_data_unregistered (size) { | | |
|     uuid_iso_iec_11578 | 128 | uimslbf |
|     for( i = 16; i < payloadSize; i++ ) | | |
|        **user_data_payload_byte** | 8 | bslbf |
| } | | |

(b)

| Syntax | No. of Bits | Format |
|---|---|---|
| depth_information_for_graphics_data ( ) { | | |
|     userdata_id | 16 | uimslbf |
|     depth_information_for_graphics _length | 8 | bslbf |
|     depth_information_for_graphics ( ) | | |
| } | | |

## FIG. 15

| Syntax | No. of Bits | Format |
|---|---|---|
| depth_information_for_graphics () { | | |
| partition_type | 3 | bslbf |
| reserved | 1 | 1 |
| partition_count | 4 | bslbf |
| for ( partition = 0 ;  partition < partition_count ; partition++) { | | |
| disparity_in_partition | 8 | tcimsbf |
| } | | |
| } | | |

EP 2 672 713 A1

# FIG. 16

partition_type  (3)

    INDICATING PARTITION TYPE OF SCREEN.
    '000'    NOT PARTITIONED
    '001'    PARTITIONED INTO TWO REGIONS IN EACH OF HORIZONTAL AND VERTICAL DIRECTIONS.
    '010'    PARTITIONED INTO THREE REGIONS IN EACH OF HORIZONTAL AND VERTICAL DIRECTIONS.
    '011'    PARTITIONED INTO FOUR REGIONS IN EACH OF HORIZONTAL AND VERTICAL DIRECTIONS.
    Others    reserved

partition_count  (4)

    TOTAL NUMBER OF PARTITIONED REGIONS, WHICH IS DEPENDENT ON Partition_type.

disparity_in_partition  (8)

    REPRESENTATIVE disparity VALUE IN EACH PARTITIONED REGION, WHICH IS, IN MOST CASES,
    THE MINIMUM disparity VALUE IN ASSOCIATED REGION.

# FIG. 17

PARTITION EXAMPLES OF PICTURE DISPLAY SCREEN

(a) Type=000

| |
|---|
| partition 0000 |

(b) Type=001

| partition 0000 | partition 0001 |
|---|---|
| partition 0010 | partition 0011 |

(c) Type=011

| partition 0000 | partition 0001 | partition 0010 | partition 0011 |
|---|---|---|---|
| partition 0100 | partition 0101 | partition 0110 | partition 0111 |
| partition 1000 | partition 1001 | partition 1010 | partition 1011 |
| partition 1100 | partition 1101 | partition 1110 | partition 1111 |

EP 2 672 713 A1

## FIG. 18

| Syntax | No. of Bits | Format |
|---|---|---|
| depth_information_for_graphics () { | | |
|     partition_type | 3 | bslbf |
|    reserved | 1 | 1 |
|     partition_count | 4 | bslbf |
|    reserved | 2 | 11 |
|    picture_count | 6 | bslbf |
|    for (picture = 0 ; picture < picture_count ; picture++){ | | |
|       for ( partition = 0 ;  partition < partition_count ; partition++) { | | |
|          disparity_in_partition | 8 | tcimsbf |
|       } | | |
|    } | | |
| } | | |

EP 2 672 713 A1

# FIG. 19

```
partition_type  (3)
        INDICATING PARTITION TYPE OF SCREEN.
        '000'         NOT PARTITIONED
        '001'         PARTITIONED INTO TWO REGIONS IN EACH OF HORIZONTAL AND VERTICAL DIRECTIONS.
        '010'         PARTITIONED INTO FOUR REGIONS IN EACH OF HORIZONTAL AND VERTICAL DIRECTIONS.
        Others        reserved


partition_count  (4)
        TOTAL NUMBER OF PARTITIONED REGIONS, WHICH IS DEPENDENT ON Partition_type.
picture_count (6)
        INDICATING THE NUMBER OF pictures WHEN ENCODING A PLURALITY OF pictures TOGETHER.
disparity_in_partition  (8)

        REPRESENTATIVE disparity VALUE IN EACH PARTITIONED REGION, WHICH IS, IN MOST CASES,
        THE MINIMUM disparity VALUE IN ASSOCIATED REGION.
```

# FIG. 20

(a)

```
user_data() {
        user_data_start_code                                              32
        depth_information_ for_ graphics_data_identifier                  32
        while( nextbits() != '0000 0000 0000 0000 0000 0001' ) {
                        depth_information_ for_ graphics_data()
        }
        next_start_code()
}
```

(b)

| Syntax | No. of Bits | Identifier |
|---|---|---|
| depth_information_ for_ graphics_data() {<br>        depth_information_ for_ graphics_Length<br>        depth_information_ for_ graphics ()<br>} | 8 | uimsbf |

EP 2 672 713 A1

# FIG. 21

**DISPARITY INFORMATION (Disparity)**

DISPARITY   POSITIVE VALUE

DISPARITY   NEGATIVE VALUE

DISPLAY GRAPHICS

BACK DIRECTION

SCREEN

FRONT DIRECTION

DISPLAY GRAPHICS

○ FOR RIGHT EYE DISPLAY

● FOR LEFT EYE DISPLAY

IMAGE

GRAPHICS

LEFT EYE   RIGHT EYE

# FIG. 22

IMAGE DATA

DISPARITY INFORMATION

GRAPHICS

EP 2 672 713 A1

# FIG. 23

IMAGE DATA

DISPARITY INFORMATION

Disparity Set

Disparity Set

Disparity Set

GRAPHICS

EP 2 672 713 A1

# FIG. 24

GRAPHICS

**(a) Side View**

BACKGROUND

**OSD**
**Menu**
**Menu**
**Menu**

MIDDLE GROUND OBJECT

**Subtitle**

SUBTITLE

FOREGROUND OBJECT

**(b) Top View**

BACKGROUND

MONITOR POSITION

MIDDLE GROUND OBJECT

SUBTITLE

FOREGROUND OBJECT

GRAPHICS

EP 2 672 713 A1

# FIG. 25

<u>200</u>

# FIG. 26

CONTROL BY DEPTH CONTROL UNIT

# FIG. 27

START —ST1

IS THERE
INSERTION I OF disparity FOR
GRAPHICS? — ST2

no →

yes ↓

CHECK ALL partitions CONTAINING COORDINATES
(POSITIONS IN SCREEN: HORIZONTAL AND VERTICAL
PIXEL POSITIONS MAINLY AT TOP LEFT OF picture)
OF REGION IN WHICH GRAPHICS WILL BE overlaid. — ST3

COMPARE disparities OF CHECKED partitions
AND SET THE MINIMUM VALUE TO BE graphics_disparity. — ST4

IS THERE
Subtitle stream HAVING
disparity? — ST5

no →

yes ↓

COMPARE Subtitle disparity VALUE
(subtitle_disparity) WITH GRAPHICS
disparity VALUE (graphics_disparity). — ST6

SHIFT DISPLAY POSITIONS BY UTILIZING
disparity VALUE CALCULATED IN RECEIVER
AND OVERLAY THE DATA ON VIDEO. — ST11

①

②

EP 2 672 713 A1

# FIG. 28

# FIG. 29

VIDEO

| Partition 0 | Partition 1 | Partition 2 | Partition 3 |
| Partition 4 | Partition 5 | Partition 6 | Partition 7 (GRAPHICS) |
| Partition 8 | Partition 9 | Partition 10 | Partition 11 |
| Partition 12 | Partition 13 | Partition 14 | Partition 15 |

VIEW FROM ABOVE

VIDEO

GRAPHICS

# FIG. 30

VIDEO

| Partition 0 | Partition 1 | Partition 2 | Partition 3 |
|---|---|---|---|
| | | | GRAPHICS |
| Partition 4 | Partition 5 | Partition 6 | Partition 7 |
| Partition 8 | Partition 9 | Partition 10 | Partition 11 |
| | SUBTITLE | | |
| Partition 12 | Partition 13 | Partition 14 | Partition 15 |

VIEW FROM ABOVE

VIDEO

SUBTITLE

GRAPHICS

EP 2 672 713 A1

# FIG. 31

10A

| BROADCASTING STATION | | TS ⇒ | | SET TOP BOX | HDMI | TELEVISION RECEIVER |

BROADCASTING STATION — 100

SET TOP BOX — 200A

TELEVISION RECEIVER — 200B

# FIG. 32

<u>200A</u>

EP 2 672 713 A1

# FIG. 33

200B

251

From HDMI
video → SCALER →

217

OVERLAY UNIT → To video
3D display
process

221

GRAPHICS
BUFFER

219

From HDMI
disparity → DEPTH
CONTROL UNIT ← TV GRAPHICS
GENERATING
UNIT

220

From HDMI
audio → AUDIO
PROCESSING
UNIT → To
Speaker

252

FIG. 34

VIDEO

| Partition 0 | Partition 1 | Partition 2 | Partition 3 |
| Partition 4 | Partition 5 | Partition 6 | Partition 7 |
| Partition 8 | Partition 9 | Partition 10 | Partition 11 |
| Partition 12 | Partition 13 | Partition 14 | Partition 15 |

STB GRAPHICS

SUBTITLE

TV GRAPHICS

VIEW FROM ABOVE

VIDEO

TV GRAPHICS

# FIG. 35

<div align="center">**INTERNATIONAL SEARCH REPORT**</div>

| | International application No. |
|---|---|
| | PCT/JP2012/082710 |

**A. CLASSIFICATION OF SUBJECT MATTER**
*H04N13/00*(2006.01)i, *H04N7/26*(2006.01)i

According to International Patent Classification (IPC) or to both national classification and IPC

**B. FIELDS SEARCHED**

Minimum documentation searched (classification system followed by classification symbols)
H04N13/00, H04N7/26

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2011/001858 A1  (Sony Corp.),<br>06 January 2011 (06.01.2011),<br>paragraphs [0016], [0060], [0122], [0243] to [0253]; fig. 10, 26, 77<br>& US 2011/0134210 A1   & EP 2451171 A1<br>& CN 102342113 A | 1,2,6-9<br>3-5,14-20 |
| X<br>Y | WO 2011/001856 A1  (Sony Corp.),<br>06 January 2011 (06.01.2011),<br>paragraphs [0042], [0302] to [0304]; fig. 10, 67, 68<br>& EP 2451170 A1          & CN 102210155 A | 10-13<br>3-5,14-20 |
| A | JP 2005-006114 A  (Sharp Corp.),<br>06 January 2005 (06.01.2005),<br>entire text; all drawings<br>(Family: none) | 1-20 |

| | Further documents are listed in the continuation of Box C. | | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 January, 2013 (28.01.13) | 12 February, 2013 (12.02.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005006114 A